(19) Europäisches Patentamt
European Patent Office
Office européen des brevets

(11) EP 2 219 129 A1

(12) EUROPEAN PATENT APPLICATION

(43) Date of publication:
**18.08.2010 Bulletin 2010/33**

(51) Int Cl.:
***G06F 21/00*** *(2006.01)* ***H04N 7/24*** *(2006.01)*

(21) Application number: **10250196.2**

(22) Date of filing: **05.02.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **13.02.2009 JP 2009032026**

(71) Applicant: **Sony Corporation**
**Tokyo (JP)**

(72) Inventor: **Igarashi, Tatsuya**
**Tokyo (JP)**

(74) Representative: **DeVile, Jonathan Mark et al**
**D Young & Co LLP**
**120 Holborn**
**London EC1N 2DY (GB)**

# (54) Content distribution apparatus, content use apparatus, content distribution system, content distribution method and program

(57) There is provided a content distribution apparatus which includes an encrypting part for encrypting data of each of a plurality of data segments, the data segments being formed by dividing content data into a plurality of different parts, the encrypting being performed with a segment key generated from information unique to the segment, and a license generator for generating a license that allows generation of the segment key for one or more segments to which the data contained in a certain data area in the content data belongs.

**FIG.7**

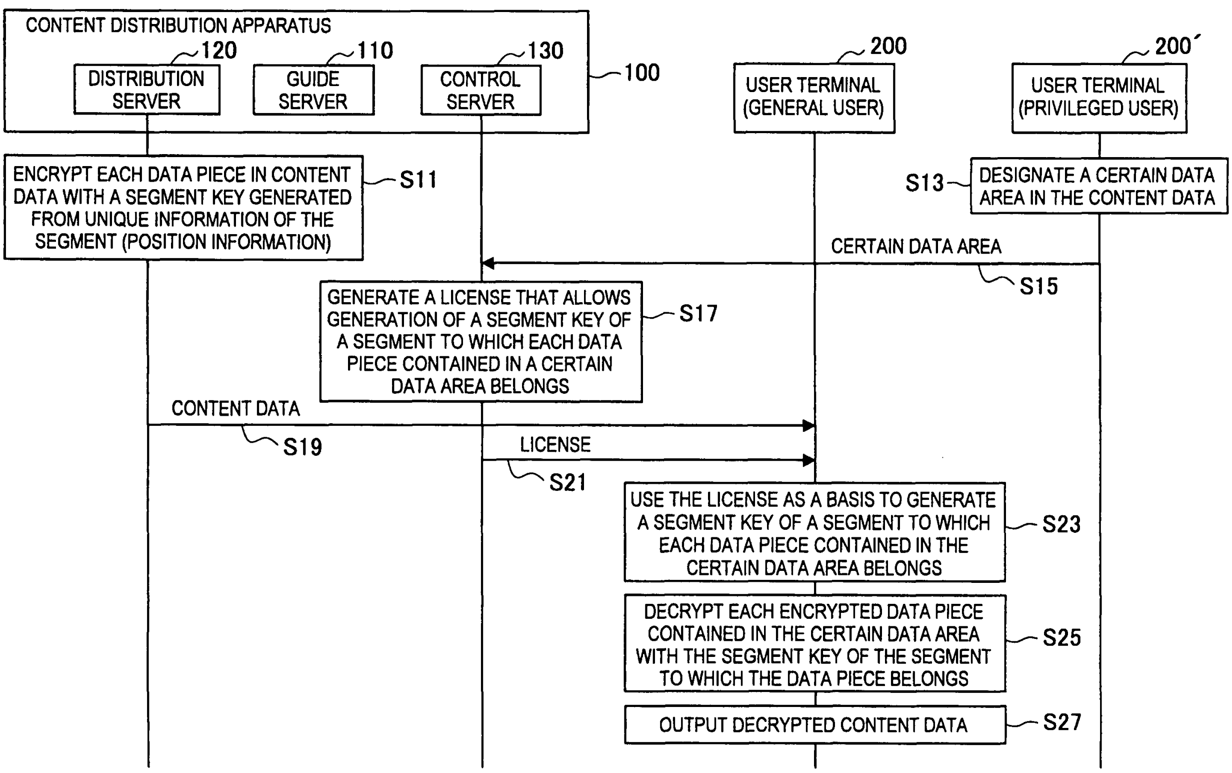


EP 2 219 129 A1

## Description

BACKGROUND OF THE INVENTION

Field of the Invention

The present invention relates to a content distribution apparatus, a content use apparatus, a content distribution system, a content distribution method and a program.

Description of the Related Art

In recent years, there is a practically-used content distribution system for distributing a part of data contained in a content to a user terminal via network. Meanwhile, to distribute the content while protecting content copyright, there is used content copyright protecting technique such as content access system, digital Right management (DRM) and the like.

SUMMARY OF THE INVENTION

However, the copyright protecting technique in related art is typically intended to limiting content use based on a license issued by unit of content. As the copyright protecting technique in related art, there are known OMA (Open Mobile Alliance), DRM, Marlin DRM and the like. With these techniques, it is difficult to limit partial use of a content and protect the content copyright appropriately.

For example, in OMA DRM, data in a predetermined area in a content is encrypted with an area key different from a content key used in encryption of the content and a license is issued that can decrypt the encrypted data. However, for example, if data in a certain area designated by a user is encrypted with an area key of the certain area and its license is issued, the encryption processing and key management by the content distribution apparatus become complicated and key management and decryption processing by the user terminal also becomes complicated.

In addition, there is a case in which data is encrypted with a content key and use of the data in a predetermined area in the content is permitted for a user terminal based on usage conditions of the content described in ODRL (open Digital Rights language) or the like. In this case, as the same content key is used, complicated key management by the content distribution apparatus and the user terminal can be eliminated. However, when appearance position of the encrypted data is changed, data outside the predetermined area permitted based on the usage conditions can become decryptable and the content copyright may not be protected appropriately.

Various respective aspects and features of the invention are defined in the appended claims. Combinations of features from the dependent claims may be combined with features of the independent claims as appropriate and not merely as explicitly set out in the claims.

In light of the foregoing, it is desirable to provide a content distribution apparatus, a content use apparatus, a content distribution system, a content distribution method and a program capable of distributing data contained in a certain data area in content data while protecting content copyright appropriately.

According to a first embodiment of the present invention, there is provided a content distribution apparatus which includes an encrypting part for encrypting data of each of a plurality of segments divided in content data with a segment key generated from information unique to the segment, and a license generator for generating a license that allows generation of the segment key for one or more segments to which the data contained in a certain data area in the content data belongs.

According to this structure, the content distribution apparatus encrypts each data in the content data with a segment key generated from the information unique to the segment. Then, the content distribution apparatus generates a license that allows generation of the segment key for each of one or more segments to which the data contained in the certain data area belongs. With this structure, the content use apparatus can generate the segment key of the segment to which each data in the certain data area belongs based on the license and decrypt the encrypted data. Therefore, the content distribution apparatus can distribute data contained in the certain data area of the content data to the content use apparatus while protecting the content copyright appropriately.

According to a second embodiment of the present invention, there is provided a content use apparatus which includes a segment key generator for, in order to decrypt data of each of a plurality of segments divided in content data, the data being encrypted with a segment key generated from information unique to the segment, generating the segment key of the one or more segments to which the data contained in a certain data area in the content data belongs based on a license that allows generation of the segment key, and a decrypting unit for decrypting the data encrypted and contained in the certain data area, with the segment key of each of the segments to which the data belongs.

According to this structure, in order to decrypt each data in content data encrypted with a segment key generated from information unique to a segment, the content use apparatus uses, as a basis, a license that allows generation of a segment key of each of one or more segments to which data contained in the certain data area in the content data belongs to generate the segment key of the segment to which the data contained in the data area belongs. Then, the content use apparatus decrypts the encrypted data contained in the data area with the segment key of each of the segments to which the data belongs. With this structure, the content use apparatus allows users to use data contained in a certain data area in content data while protecting the content copyright appropriately.

In addition, according to a third embodiment of the present invention, there is provided a content distribution system having the content distribution apparatus according to the first embodiment of the invention and the content use apparatus according to the second embodiment of the invention.

According to a fourth embodiment of the present invention, there is provided a content distribution method which includes the steps of encrypting data of each of a plurality of segments divided in content data with a segment key generated from information unique to the segment, generating a license that allows generation of the segment key for the one or more segments to which the data contained in a certain data area in the content data belongs, generating the segment key of the segment to which the data contained in the certain data area belongs based on the license, and decrypting the data encrypted and contained in the certain data area, with the segment key of the segment to which the data belongs.

According to this method, each data in content data is encrypted with a segment key generated from information unique to each segment. Next, a license is generated that allows generation of a segment key of each of one or more segments to which the data contained in a certain data area in content data belong. Then, the license is used as a basis to generate the segment key of each of the segments to which the data of the certain data area belongs and the encrypted data contained in the certain data area is decrypted with the segment key of each of the segments to which the data belongs. This allows distribution of data contained in a certain data area in content data to a content use apparatus while protecting the content copyright appropriately so that the data can be used by a user.

Further, according to the fifth and sixth embodiments, the program is provided for making the content distribution method according to the fourth embodiment executed by a computer.

According to one embodiments, there is provided a content distribution apparatus which includes an encrypting part for encrypting data of each of a plurality of data segments, the data segments being formed by dividing content data into a plurality of different parts, the encrypting being performed with a segment key generated from information unique to the segment, and a license generator for generating a license that allows generation of the segment key for one or more segments to which the data contained in a certain data area in the content data belongs. According to the embodiments of the present invention described above, there is provided a content distribution apparatus, a content use apparatus, a content distribution system, a content distribution method and a program capable of distributing data contained in a specified data area in content data while protecting content copyright appropriately.

## BRIEF DESCRIPTION OF THE DRAWINGS

Embodiments of the present invention will now be described with reference to the accompanying drawings where like parts have identical reference numerals and wherein:

FIG. 1 is a view illustrating an overview of a distribution system according to one embodiment of the present invention;
FIG. 2 is a view illustrating a principal functional structure of a control server according to a first embodiment of the present invention;
FIG. 3 is a view illustrating an example of group control information;
FIG. 4 is a view illustrating a structure of typical license;
FIG. 5 is a view illustrating content encryption scheme by unit of content;
FIG. 6 is a view illustrating a principal functional structure of user terminal according to the first embodiment of the present invention;
FIG. 7 is a sequence diagram illustrating the processing order of a content distribution method;
FIG. 8 is a view illustrating an example of a content data structure;
FIG. 9 is a view illustrating a content encryption scheme of a content distribution method according to this embodiment;
FIG. 10 is a view illustrating a license structure according to this embodiment;
FIG. 11 is a view illustrating a permissive area designated by the license illustrated in FIG. 10;
FIG. 12 is a view illustrating a data structure of a memory device, principal functional structures of a content use part and a usage restriction part and a data flow;
FIG. 13 is a flowchart of procedural steps of the content use part;
FIG. 14 is a flowchart of procedural steps of the usage restriction part;
FIG. 15 is a view illustrating a modification of the content distribution method according to the first embodiment of the present invention;

FIG. 16 is a view for explaining one example of a license according to a second embodiment of the present invention;
FIG. 17 is a view for explaining one example of the license according to the second embodiment of the present invention;
FIG. 18 is a view for explaining one example of the license according to the second embodiment of the present invention;
FIG. 19 is a view for explaining one example of the license according to the second embodiment of the present invention;
FIG. 20 is a view for explaining one example of the license according to the second embodiment of the present invention;
FIG. 21 is a view for explaining one example of the license according to the second embodiment of the present invention;
FIG. 22 is a view illustrating a data structure of a memory device, principal functional structures of a content use part and a usage restriction part and a data flow; and
FIG. 23 is a view illustrating one example of a hardware configuration of a distribution server.

DETAILED DESCRIPTION OF THE EMBODIMENTS

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.
Embodiments of the present invention will be described in the following order.

1. Overview of content distribution system

2. First embodiment

2-1. Functional structure of control server
2-2. Functional structure of user terminal
2-3. Content distribution method
2-4. Conclusion
2-5. Modifications of content distribution method

3. Second embodiment

3-1. Content distribution method
3-2. Conclusion

4. Hardware configuration

[1. OVERVIEW OF CONTENT DISTRIBUTION SYSTEM 1]

FIG. 1 illustrates an overview of a content distribution system 1 according to an embodiment of the present invention.

As illustrated in FIG. 1, the content distribution system 1 has one or more content distribution apparatuses 100 connected to each other via a communication network 3 and one or more user terminals 200. The communication network 3 is, for example, Internet, next-generation network (NGN) or the like. Each content distribution apparatus 100 is a server apparatus, and the user terminals 200 are content use apparatus having network functions including a television receiver, a personal computer, a portable phone and the like. Here, the content is digital data including sound data of music, radio, performance or the like, image data of movie, image program and pictures and the like, image/text data including software, newspaper, book and the like.
The content distribution apparatus 100 has a guide server 110, a distribution server 120 and a control server 130. The guide server 110 is configured to provide guide information of a content distributable from the distribution server 120 to a user terminal 200 and process selection, sales and the like of the content with the user terminal 200. The distribution server 120 is configured to encrypt the content selected or sold via the guide server 110 based on the DRM technique and distribute it to the user terminal 200. The control server 130 generates a license for making the encrypted content decrypted by the user terminal 200. In the content distribution apparatus 100, the guide server 110, the distribution server 120 and the control server 130 may be configured as different servers or as a single, integral-type server.

The content distribution apparatus 100 encrypts each data in content data of each of divided segments with a segment key SKey generated from information unique to the segment. Further, the content distribution apparatus 100 generates a license for generating the segment key SKey of one or more segments to which data contained in a certain data area in the content data belongs. The user terminal 200 uses the license obtained from the content distribution apparatus 100 as a basis to generate the segment Skey of the segment to which each data contained in the certain data area belongs and decrypt the encrypted data contained in the certain data area with the segment key Skey of the segment to which the data belongs.

Hence, this content distribution system 1 according to the embodiment of the present invention can distribute each data contained in a certain data area in a content data to the user terminal 200 so that the user can use it, while protecting the content copyright appropriately.

<2. FIRST EMBODIMENT>

First, description is made about a content distribution method according to the first embodiment of the present invention.

[2-1. FUNCTIONAL STRUCTURE OF CONTROL SERVER 130]

FIG. 2 illustrates a principal functional structure of the control server 130 according to the first embodiment of the present invention. As illustrated in FIG. 2, the control server 130 has a communication part 131, a group controller 133, a group control information storage 135, a user key generator 137, a content information storage 139, a license generator 141 and a signature generator 143.

The communication part 131 transmits and receives various data between the guide server 110, the distribution server 120 and the user terminal 200. The communication part 131 transmits and receives information for processing selection, sales and the like of the contents and user registration to and from the guide server 110, and transmits and receives information about an encryption system of the distributed content to and from the distribution server 120. The communication part 131 transmits and receives information for generating a license and the license to and from the user terminal 200.

The control server 130 controls a license by a user bind system. The user bind system is a license issuance system in which one or more user terminals 200 belonging to respective users are registered as one group, and the user terminals 200 of the same group share one license. The control server 130 may control the licenses by a device bind system in which a license is issued for each user terminal 200.

When the user uses the user terminal 200 to request device registration in the group, the group controller 133 performs authentication processing of the user and instructs the user key generator 137 to generate a user key UKey. The user key generator 137 generates the user key UKey and outputs it to the group controller 133. The group controller 133 distributes the user key UKey to the user terminal 200. Further, the group controller 133 stores a user ID of the user, a terminal ID of the user terminal 200 and the user key UKey associated with each other in the group control information storage 135. Here, the group controller 133 obtains the public key PKey specific to the user terminal 200 in advance and encrypts the user key UKey with the public key PKey and distributes it to the user terminal 200.

FIG. 3 illustrates one example of the group control information. In the group control information illustrated in FIG. 3, the user ID "Yamagishi" and the terminal ID "A41342" of the user terminal 200 are stored as associated with the "user key A". Likewise, the user ID "Osaki" and two terminal IDs of the user terminals 200 "A83188" and "B76322" are stored as associated with the "user key B".

Here, the user ID is generated in advance in the user registration processing performed between the user terminal 200 and the guide server 110 and is used in the user authentication processing performed between the user terminal 200 and the control server 130. Further, the terminal ID is identification information unique to the terminal.

When the user uses the user terminal 200 to request issuance of license necessary for use of a content, the license generator 141 asks the guide server 110 about permission of license issuance to the user. Then, when the license issuance is permitted, the license generator 141 generates a license necessary for use of the content and provides it to the user terminal 200.

FIG. 4 illustrates a typical license structure. FIG. 5 illustrates a content encryption system by unit of content. As illustrated in FIG. 4, the license includes an encrypted content key ECKey, usage conditions and signature.

The content key CKey is a key for decrypting the encrypted content. Here, the content ID, content key CKey and usage conditions of the content are stored in advance in the content information storage 139. The content is controlled by the distribution server 120 while it is encrypted with a content key CKey by a common key system such as AES (Advanced Encryption Standard) or the like as illustrated in FIG. 5. Accordingly, the distribution server 120 serves as an encryption part.

The license generator 141 uses the content ID of the content for which the license is issued as a basis to obtain content key CKey and usage conditions from the content information storage 139. The license generator 141 obtains from the group control information storage 135 the user key UKey corresponding to the user ID of the user which has requested license issuance and encrypts the content key CKey with the user key UKey. Then, the user terminal 200 that has the user key UKey used in encryption is permitted to decrypt the content key ECKey.

The usage conditions define conditions permitted in using the content by the user terminal 200. Here, the content is used in various use forms in accordance with replay, export (move of the content to another device or medium), copy, backup, display, print and the like. For example, the usage conditions illustrated in FIG. 4, replay of the content having the content ID "C2323" is permitted. Meanwhile, export of the content is permitted with limit number of times of four. The usage conditions are contained in the license as not encrypted so that the user can check the usage conditions.

The signature is contained as it is encrypted so as to assure validity of the license issuer and to prevent tampering of the license. The signature generator 143 generates digest of the license and the signature of the license issuer by an encryption system such as SHA (Secure Hash Algorism) with the private key PKey of the control server 130.

Each structural element of the control server 130 may be configured of a general-purpose member or circuit or hardware for specialized function of the structural element. Further, at least a part of the structural element may be realized by a program executed on the CPU.

[2-2. FUNCTIONAL STRUCTURE OF USER TERMINAL 200]

FIG. 6 illustrates a principal functional structure of the user terminal 200 according to the embodiment of the present invention. As illustrated in FIG. 6, the user terminal 200 has a communication part 201, an operator 203, an output part 205, a guide processor 207, a registration processor 209, a license controller 211, a content acquisition part 213, a memory device 215, a content use part 217 and a usage restriction part 219.

The communication part 201 transmits and receives various data to and from the guide server 110, the distribution server 120 and the control server 130. The communication part 201 transmits and receives information for processing content selection, sales and the like and user registration to and from the guide server 110. The communication part 201 transmits and receives information for distributing contents and contents to and from the distribution server 120. The communication part 201 transmits and receives information for license issuance and license to and from the control server 130.

The operator 203 acquires from the user operation information for processing user registration, content selection and sales and the like. The output part 205 outputs sound information, video information, image information and the like associated with content use.

The guide processor 207 processes creation of user registration information, content selection and sales and the like performed with the guide server 110. The guide processor 207 obtains information necessary for various processing from the guide server 110 for processing and presents it as guide information having HTML (Hyper Text Markup Language) document and the like to the user via the output part 205. The guide processor 207 provides operation information input from the user via the operator 203 and information processed based on the operation information to the guide server 110.

The registration processor 209 instructs the control server 130 to perform group registration of the user terminal 200 in response to the instruction of group registration from the guide processor 207. The registration processor 209 registers the user ID and the terminal ID in the control server 130 and acquires the user key UKey from the control server 130. The registration processor 209 stores the user key UKey in the memory device 215.

The license controller 211 acquires a license necessary for use of the content from the control server 130 in response to the instruction of license acquisition from the guide processor 207. The HTML document of the guide information has link information embedded for issuing the license, and HTML document is obtained in accordance with a protocol such as HTTP (Hyper Text Transfer Protocol). When the user operates a content selection button, a purchase decision button and the like displayed as guide information, the license controller 211 receives a license acquisition instruction from the guide processor 207. The license controller 211 uses the link information as a basis to obtain the information necessary for license acquisition from the distribution server 120 and acquires the license from the control server 130 in accordance with the communication protocol specific to the DRM technique.

The content acquisition part 213 acquires the encrypted content from the distribution server 120 in accordance with the content acquisition instruction from the guide processor 207. The HTML document of the guide information has link information embedded which shows a location of the content and the content is acquired in accordance with the protocol such as HTTP, RTSP (RealTime Streaming Protocol), RTP (RealTime Transport Protocol), multicast RTP or the like. When the user operates a content use button or the like displayed as the guide information, the content acquisition part 213 receives the content acquisition instruction from the guide processor 207. The content acquisition part 213 acquires the encrypted content from the distribution server 120 based on the link information.

Here, in using a streaming-type distribution service, the content acquisition part 213 outputs streaming data of the content distributed from the distribution server 120 to the content use part 217 sequentially. Further, in using a part of data contained in the content, the Range header of HTTP is used. Meanwhile, in using download-type distribution service, the content acquisition part 213 stores in the memory device 215 content distributed from the distribution server 120, and may read out the contents when using the content and output it to the content use part 217. In this case, use of the content is instructed from the guide processing part 207 directly to the content use part 217.

The memory device 215 stores the user key UKey acquired from the registration processor 209 and the license acquired from the license controller 211. In addition, when using the download-type distribution service, the memory device 215 stores the content acquired from the content acquisition part 213.

The content use part 217 performs processing for content use. The content use part 217 outputs a content use instruction to the usage restriction part 219 in response to a request for use from the user. When the content use is permitted, the content use part 217 acquires the content key CKey of the content from the usage restriction part 219 and decrypts the encrypted content with the content key CKey. Then, the content use part 217 performs processing such as content reply, export or the like in accordance with a use method instructed by the request for use from the user.

The usage restriction part 219 acquires the license of the content designated by the content use part 217 and the user key UKey from the memory device 215 in accordance with the content use instruction from the content use part 217. The usage restriction part 219 compares the use method designated by the content use instruction with the usage conditions contained in the license. When the designated use method meets the usage conditions, the usage restriction part 219 decrypts the encrypted content key ECKey contained in the license with the user key UKey and outputs it as the content key CKey to the content use part 217. Meanwhile, when the designated use method does not meet the usage conditions, it notifies the user that the content use is not permitted.

Here, each structural element of the user terminal 200 may be configured of a general-purpose member or circuit or hardware for specific function for the structural element. In addition, at least a part of the function of each structural element may be realized by a program executed on the CPU.

[2-3. CONTENT DISTRIBUTION METHOD]

Next, description is made, with reference to FIGS. 7 to 14, about a content distribution method according to the first embodiment of the present invention.

FIG. 7 is a sequence diagram illustrating the processing order of the content distribution method. As illustrated in FIG. 7, before content distribution, the distribution server 120 encrypts each data in content data of each of a plurality of divided segments with the segment key SKey generated from information specific to the segment (step S11). Here, this embodiment is described with the case of using position information indicating the position of each segment in content data as one example of unique information of the segment. Further, a user terminal 200' of a privileged user having an authority to generate a license acquires designation information for designating a certain data area in the content data from the privileged user (S13) and transmits it to the control server 130 (S15). The control server 130 generates a license which allows generation of segment key SKey of one or more segments to which data contained in the certain data area designated by the designation information belongs (S17).

In content distribution, a user terminal 200 of a general user acquires an encrypted content from the distribution server 120 and acquires a license of the content from the control server 130 (S19, S21). The user terminal 200 uses the license as a basis to generate the segment key SKey if the segment to which each data contained in the certain data area belongs (S23) and decrypts each encrypted data contained in the certain data area with the segment key SKey of the segment to which the data belongs (S25). With this process, the user terminal 200 can output the decrypted content data (S27).

FIG. 8 illustrates an example of the content data structure. As illustrated in FIG. 8, for example, the content has a data structure of media file 10 based on ISO-14496-12, 14, 15, having a file format designation area 11, a movie box area 13 (also referred to as "moov 13") and a movie data box area 15 (also referred to as "mdat 15"). In the file format designation area 11, a file format of the media file 10 is designated. In the moov 13, a sound track, a video track, track information 21, 23, 25 of other tracks are stored. In the mdat 15, data 31, 33 of content sound data, video data and the like are stored as encrypted or not encrypted.

The track information 21, 23 and 25 contains content attribute information such as title and access information to the mdat 15. In using the content, the access information is used as a basis to access interleaved data and data in a predetermined data area. In addition, when the data is encrypted, protection information 27 is added to the track information 21, 23 and 25. In the example illustrated in FIG. 8, the video data 33 is encrypted, and the protection information 27 for describing encryption algorithm of video data, content ID and the like is added to the video track information 23. Here, the protection information 27 includes signature information generated by the content key CKey to judge presence or absence of information falsification..

The sound data 31 of the content is stored, for example, as stereo sound data of 128 kbit/s compressed in accordance with HE-AAC (High-Efficiency Advanced Audio Coding). The video data 33 is stored, for example, as high-vision video data of 8 M bit/s compressed in accordance with AVC (Advanced Video Coding)/H.264. The video data 33 is encrypted per AU (Access Unit) of AVU by AES of 128 bit key using CBC (Cipher Block Chaining) mode, for example.

FIG. 9 illustrates a content encryption system in the content distribution method according to this embodiment. As illustrated in FIG. 9, the content data is divided into a plurality of segments. Here, the unit of segment or segment offset (also referred to as "offset"), which is described later, depends on the content data structure. For example, OMA DRM specifies a data structure of DCF (DRM Content Format) or PDCF (Packetized DCF).

In the case of DCF, the content data is divided into a plurality of segments having fixed byte length and encrypted as a whole. Therefore, the segment and offset are shown by unit of fixed byte length. Meanwhile in the case of PDCF, the content data is divided into packets and encrypted per packet. A plurality of packets form one segment. Therefore, the segment and offset are shown by unit of packet.

In the content encryption system of this embodiment, each data in the content data is controlled by the distribution server 120 while it is encrypted with the segment key SKey generated from the position information (segment number Seg) dependent on the segment and content key CKey dependent on the content, which is different from the case illustrated in FIG. 5. Therefore, the distribution server 120 serves as an encryption part.

The segment key SKey of each segment is generated in accordance with hash encryption algorithm such ash SHA-256 or the like based on the position information of the segment in the content data and the content key CKey. Here, the content key CKey is an encryption key used in encrypting of the whole content data. Further, the position information of each segment indicated by the segment number of its segment, and the first segment in the content data is assigned Seg#0, and following segments are assigned Seg#1, Seg#2, ..., in ascending order When the generation function of the segment key SKey is SHash (), the segment key SKey (Seg) of the segment number Seg is obtained by the following expression.

(Expression 1)

$$SKey\ (Seg) = SHash\ (CKey,\ Seg)$$

FIG. 10 illustrates the license structure according to this embodiment. This structure is different from that illustrated in FIG. 4 and includes usage conditions for designating the permission range of content use, Offset and segment length SegSize. Here, the segment length, offset and permission range are represented by AU of AVC as unit of encryption. The usage conditions may include a plurality of permission areas.

The segment length defines the number of AUs contained in one segment. Data corresponding to AUs contained in one segment is encrypted with the same segment key SKey. The offset is utilized when data contained in a certain data area in the content data is provided as other content data, which will be described in detail below. The permission range designates the length of data area (NumAU) and the start position (StartAU) of the certain data area by unit of AU. Here, in the license illustrated in FIG. 10, the number of AUs contained in one segment is given "2000" and the offset is "0". Further, the permission range designates the certain data area as a data area of AU# "103432" to "25439".

FIG. 11 illustrates the permission range designated by the license illustrated in FIG. 10. As illustrated in FIG. 11, the content data is divided into a plurality of segments having segment length of "2000". The certain data area is designated by the offset and permission range. The certain data area is designated by a sum of the start position of the data area and the offset (Offset + StartAU) and the length of the data area (NumAU). As the offset is "0", the certain data area is designated to range from "103432"nd AU from the beginning of the content data to "25439"th AU (AU #103432 to AU #128871). Therefore, the data contained in the certain data area belongs to segments of Seg #52 to Seg #65.

The following description is made, with reference to FIGS. 12 to 14, about the processing of the user terminal 200 in the content distribution method according to this embodiment.

FIG. 12 illustrates a data structure of the memory device 215, principal functional structures of the usage restriction part 219 and the content use part 217 and a data flow. FIG. 13 is a flowchart illustrating the procedural steps of the content use part 217 and FIG. 14 is a flowchart illustrating the procedural steps of the usage restriction part 219.

As illustrated in FIG. 12, the content use part 217 has a data structure analyzer 221, a decryption part 223, a decoding part 225 and a replay part 227. The usage restriction part 219 has a usage condition judgment part 231, a content key decryption part 233 and a segment key generation (deviation) part 235.

As illustrated in FIG. 13, the content use part 217 receives the content replay instruction, and the content ID and the replay start position (StartTime) of the content to replay from the content acquisition part 213 (step S101). When the user requests content acquisition based on guide information, the content acquisition part 213 receives the content from the distribution server 120 and instructs the content use part 217 to replay the content. The replay start position is designated, for example, as any position (point) from 0.00 second to 3600.00 seconds when the content needs replay time of 60 minutes.

When receiving the content replay instruction, the data structure analyzer 221 analyzes a data structure of the content corresponding to the content ID and sets the AU number CurAU to be replayed corresponding to the replay start position (S103). As described with reference to FIG. 8, in the media file 10 based on ISO, the data structure of the mdat 15 storing the data is defined as the track information 21, 23, 25 stored in the moov 13. Therefore, the data structure analyzer 221 reads and analyzes the moov 13 of the content thereby to set the AU number CurAU to be replayed based on the track information 21, 23, 25. This specifies the access method to the data corresponding to AU to be replayed stored in the mdat 15.

When CurAU is set, the content use part 217 outputs the content ID and CurAU to the usage restriction part 219 to ask about the presence of a license which allows decryption of data corresponding to the CurAU (S105).

As illustrated in FIG. 14, when the content ID and CurAU are input, the usage restriction part 219 starts processing (S127). The usage condition judgment part 231 searches for one or more licenses corresponding to the content ID (S129). The license is usually acquired in advance by the control server 130 and stored in the memory device 215. Here, the content purchase URL may be contained in the moov 13 as meta data, in which case, the URL is accessed via the guide processor 207 and after purchase of the content is acknowledged, the license is acquired from the control server 130.

In the processing of step S131, processing of S133 is performed if the license is acquired. If the license is not acquired, an error response is given (S137).

When the license is acquired, the usage restriction part 219 acquires the license corresponding to the content ID and the user key UKey from the memory device 215 (S133). Here, the license contains the encrypted content key ECKey and usage conditions, and in the usage conditions, the segment length SegSize, permission range (StartAU, NumAU) and Offset are designated.

When the license and user key UKey are acquired, the usage condition judgment part 231 checks if the data corresponding to CurAU can be replayed (S135). The usage condition judgment part 231 checks if the content use method meets the usage conditions and the CurAU is included in the permission range. Here, the usage condition judgment part 231 determines the CurAU is contained in the permission range if the CurAU is StartAU or greater and less than StartAU + NumAU. When the data corresponding to CurAU can be replayed, the processing of S139 is performed and if it may not be replayed, an error response is given (S137).

When the CurAU is within the permission range, the usage condition judgment part 231 checks if it meets other usage conditions such as license expiration date and the like (S139). Here, if it meets the other usage conditions, the processing of S141 is performed and when it does not meet the usage conditions, an error response is given (S137).

When it meets the other usage conditions, the content key decryption part 233 decrypts the encrypted content key ECKey with the user key UKey to obtain the content key CKey (S141). Here, when the decryption function of the content key ECKey is given as Decrypt (), the content key CKey is obtained by the following expression.

(Expression 2)

$$CKey = Decrypt\ (UKey)\ \{ECKey\}$$

When content key CKey is obtained, the segment key generator 235 uses the content key CKey and CurAU as a basis to generate the segment key SKey of a segment to which the CurAU belongs (S143). Here, the segment key SKey is generated based on the content key CKey and the segment number Seg of the segment to which the CurAU belongs, in accordance with the SHash function. Here, the generation function of the segment key SKey is SHash (), the segment SKey is obtained by the following expression. Here, INT () means round down of the number of decimal places.

(Expression 3)

$$SKey = SHash\ (CKey,\ Seg)$$

(Expression 4)

$$Seg = INT ((Offset + CurAU)/SegSize)$$

When the segment key SKey is generated, the usage restriction part 219 outputs the segment key SKey to the content use part 217 (S145), and the processing of the content use part 217 is started again with the processing of S107. In the error response of S137, the segment key SKey is set to NULL to denote non-permission, the processing of S145 is performed and the processing of the content use part 217 is started again.

When the processing is restarted with output of the segment key SKey, the content use part 217 checks the segment key SKey to know permission or non-permission of the content use (S107). When the segment key SKey is not set to NULL, the processing of step S109 is performed, and when the segment key SKey is set to NULL, an error response is given (S123).

When the content use is permitted, the decryption part 223 reads encrypted data edat corresponding to CurAU from the mdat 15 (S109). Reading of the encrypted data edat is performed using the access method specified in the processing of S103. When the reading function of the data edat is mdat (), the encrypted data edat corresponding to CurAU is obtained by the following expression.

(Expression 5)

$$edat = mdat (CurAU)$$

Reading the encrypted data edat, the decryption part 223 decrypts the encrypted data edat with the segment key SKey to obtain compressed data cdat (S111). Here, when the decryption function of the encrypted data edat is Decrypt (), the compression data cdat is obtained by the following expression. When the data is encrypted by AES of 128 bit key using CBC mode, the compression data cdat is decompressed with the segment key SKey and an initialization vector recorded in AU.

(Expression 6)

$$cdat = Decrypt (SKey) \{edat\}$$

When receiving the compression data cdat, the decoding part 225 decodes the compression data cdat to obtain pre-compression data bdat (S113). When the decoding function of the pre-compression data bdat is Decode (), the pre-compression data bdat is obtained by the following expression. In the case of video data, for example, decoding is performed based on the compression system such as AVC/H.234 or the like, and in the case of sound data, for example, decoding is performed based on the compression system such as HE-AAC or the like.

(Expression 7)

$$bdat = Decode (cdat)$$

In the processing of step S113, if the encrypted data edat is decrypted with a valid segment key SKey, it can be decrypted into normal data cdat. On the other hand, if the encrypted data edat is not decrypted with the valid segment key SKey, bit sequence defined based on the compression system may not be obtained and it results in detection of a decoding error. If the track information 21, 23, 25 is tampered or data position is changed at reception of the content data, the data is not specified as data within the permission range for decoding, and a decoding error is detected.

Receiving the pre-compression data bdat, the content use part 217 checks if the pre-compression data bdat is appropriate to know successful decoding (S115). When the pre-compression data bdat is appropriate, the processing of step S117 is performed, and if not, an error response is given (S123).

When the pre-compression data bdat is appropriate, the replay part 227 replays the pre-compression data bdat as video information and/or sound information and outputs it to the output part 205.

Then, the content use part 217 checks whether the content replay is finished or not (S119). Here, the content use part 217 checks to see if the content replay finish is instructed or CurAU is the final AU designated in the permission range. When the content replay is finished, the content use is finished with the processing of step S125 and if it is not finished, the processing of S121 is performed.

When the content replay is not finished, the data structure analyzer 221 analyzes the track information 21, 23, 25 stored in the moov 13 and sets an AU number CurAU to replay next (S121). Then, the content use part 217 returns to step S105 and asks the usage restriction part 219 if it has the license that allows decryption of the data corresponding to CurAU.

[2-4. CONCLUSION]

As described above, according to the content distribution method of the first embodiment, each data in content data is encrypted with a segment key SKey generated from information unique to its segment, or particularly, position information of the segment in the content data. Next, a license is generated which allows generation of the segment key SKey of one or more segments to which the data contained in the certain data area in the content data belongs. Then, the license is used as a basis to generate the segment key SKey of the segment to which the data contained in the certain data area belongs, and each encrypted data contained in the certain data area is decrypted with the segment key SKey of the segment to which the data belongs.

Therefore, it is possible to distribute the data contained in the certain data area in the content data to the user terminal 200, so that the user can use the data while protecting the content copyright appropriately. Further, the license that allows use of the data contained in the certain data area can be issued using a simple method and securely.

[2-5. MODIFICATIONS OF CONTENT DISTRIIBUTION METHOD]

(MODIFICATION 1)

FIG. 15 illustrates a modification 1 of the content distribution method according to the first embodiment of the present invention. In the above description, each data in content data that composes a content is encrypted and distributed as a part of the content. Meanwhile, in the modification 1 of the content distribution method described below, each data in content data in content data that composes a content is encrypted and distributed as another content instead of a part of the content.

FIG. 15 illustrates encrypted data of a content having a content ID "C2323" described with reference to FIG. 9, which data is distributed as another content having a content ID "C3004".

In this case, a media file 10 of a content having the content ID "C3004" is created. In the moov 13 of the media file 10, track information 21, 23, 25 is stored that allows use of data 31 and 33 corresponding to AU #103432 to AU #128871 of the content of the content ID "C2323". In addition, a license of the content of content ID "C3004" is issued. In the usage conditions of the license, the offset is designated as "103432" and the permission range is designated as a data area of "25439" AUs starting from AU # "0". Here, as the offset is "103432", the data area of the content ID "C3004" is designated as the area of "25439" AUs starting the "103432"th AU counting from the beginning of the content data (AU #103432 to AU #128871).

In addition, in the processing of step S143 illustrated in FIG. 14, the position information of the segment is expressed by the relative position of each data in the certain data area (CurAU) and the absolute position of a start point of the data area in the content data (Offset). Hence, the value of Offset + CurAU in using of content data of the content ID "C2323" is the same as that in using of content data of the content ID "C3004", the same segment key SKey is generated. Therefore, even in using of the content of the content ID "C3004", data contained in segments Seg #52 to Seg #65 corresponding to the data contained in the data area can be decrypted appropriately.

With this structure, when each data encrypted in content data of a content is distributed as another content, the encrypted data may be used as other content data. This enables reduction in content recording volume and the load of encryption processing in the content distribution apparatus 100.

(MODIFICATION 2)

In the above description, the position information of each segment in the content data and content key CKey are used as a basis to generate the segment key SKey of the segment. However, in encrypting MPEG-2 transport streams such as IEC (International Electrotechnical Commission) -62455 or the like with hierarchically managed encryption keys, a key stream message contained in a data stream and the position information of the data stream in a content may be used as a basis to generate a traffic key of the data stream. Likewise, a signature generated based on algorithm such as SHA or the like from the area data of the data stream may be encrypted and embedded in the area data.

(MODIFICATION 3)

Further, in the above description, the position information of a byte offset of each segment in the content data and the content key CKey are used as information unique to the segment to generate a segment key SKey of the segment. However, in the case of MPEG-2 transport stream content, a time stamp dependent on each segment may be used as information unique to the segment to generate a segment key SKey of the segment. The time stamp is information necessary for play MPEG data of each segment and, for example, RTP time stamp of a RTP header, program clock reference of an MPEG-TS header or the like may be used.

(MODIFICATION 4)

Further, in the above description, the user terminal 200 acquires a license from the control server 130 and the usage restriction part 219 provided in the user terminal 200 judges usage conditions contained in the license. However, the functional structures corresponding to the usage restriction part 219, the memory device 215, the license controller 211 and the registration processor 209 provided in the user terminal 200 may be provided in the distribution server 120. Here, the usage restriction part provided in the user terminal 200 is configured to be able to communicate with the content use part 217 of the user terminal 200 securely. In this case, the usage restriction part of the distribution server 120 judges use conditions contained in a license in response to content use instructions from the user terminal 200, and when use is permitted, the distribution server 120 sends information containing a content key Ckey to the content use part 217. With this structure, the complicated processing by the usage restriction part is executed by the content distribution apparatus 100 and thereby, the processing load on the user terminal 200 can be reduced.

<SECOND EMBODIMENT>

Next, description is made about a content distribution method according to a second embodiment of the present invention.

The content distribution method according to the first embodiment has been described by way of the case of issuing the license which allows decryption of the data contained in the certain data area in the content data.

However, when a plurality of licenses is issued which allows decryption of data contained in each of a plurality of data areas of a certain content, most of the data contained in the content can be used with use of the plurality of licenses. This makes it impossible to protect the copyright of the content appropriately. If one license is issued that allows decryption of data contained in a plurality of data areas, it becomes also difficult to protect the copyright of the content appropriately.

Hence, there is a need to restrict use of the content with use of a license that allows decryption of data contained in a certain data area. The following description is made about the content distribution method according to the second embodiment capable of restricting use of content based on a use history of data contained in one or more data areas of one or more content data.

[3-1. CONTENT DISTRIBUTION METHOD]

Hereinafter, processing of a user terminal 250 in the content distribution method according to the present invention will be described in detail with reference to FIGS. 16 to 21. Explanation of like parts of the content distribution method according to the first embodiment is omitted here.

FIGS. 16 to 21 are views for explaining examples of licenses according to the second embodiment of the present invention.

FIG. 16 illustrates a license that restricts use of data contained in a second data area close to the first data area over a predetermined time after use of the data contained in the first data area of a certain content. In usage conditions of the license L1, the content ID (C2323) and the permission range (data 1) are designated. In usage conditions of the license L2, the content ID (C2323), the permission range (data 2), the proximity distance D and the restriction removing time T are designated. As the permission range of the license L1 and the permission range of the license L2 are close to each other, the use of the data 2 (use 2) is restricted in accordance with the license L2 until a lapse of the restriction removing time T after the use of the data 1 (use 1) in accordance with the license L1. Here, when the distance M between the end of the data 1 and the start of the data 2 is less than the proximity distance D, it is determined that the data 1 and the data 2 are close to each other.

FIG. 17 illustrates a modification of the licenses illustrated in FIG. 16. In the usage conditions of the license L2', a restriction removing flag in discontinuous use is added. In usage conditions of a license L3, the content ID (C2323) and the permission range (data 3) are designated. With this structure, continuous use of the data 2 following the data 1 is restricted until a lapse of the restriction removing time T after use of the data 1 in accordance with the license L1. Here, if use of the data 1 (use 1) is followed by use of data 3 (use 2) not close to the data 1 in accordance with the license L3, the use of the data 2 (use 3) is not restricted in accordance with the license L2'.

FIG. 18 illustrates another modification of the licenses illustrated in FIG. 16. In the usage conditions of the license L2", a restriction removing flag in use of other contents is added. In the usage conditions of a license L3, the content ID (C5342) of another content and the permission range (data 4) are designated. With this structure, when the data 4 of the other content is used (use 2) in accordance with the license L4 after use of the data 1 (use 1) in accordance with the license L1, use of the data 2 (use 3) is not restricted in accordance with the license L2".

FIG. 19 illustrates a license that restricts a total use time of a data area. In usage conditions of a license L5, the content ID (C2323), the permission range (data 1, 2 and 3), the maximum total use time O and the restriction removing time T are designated. Here, when the data 3 is used at its midpoint (use time P3') following the use of the data 1 and 2 (use time P1 and P2), the use time P1 + P2 + P3 reaches the maximum total use time O. With this structure, when the data 1, 2 and 3 of a certain content are used (uses 1, 2, 3) in accordance with the license L5, for example, the use of the data 3 (use 3) is stopped at a time when the use time goes beyond the maximum total use time O during use of the data 3 (for example, while the data 3 is replayed), and then, the use of the data is restricted until a lapse of the restriction removing time T.

FIG. 20 illustrates a license that restricts the number of data areas usable in a predetermined time. In the usage conditions of a license L1, the content ID (C2323) and the permission range (data 1) are designated. In usage conditions of a license L6, the content ID (C2323), the permission range (data 2, 3), the maximum use of data area n and the restriction removing time T are designated. With this structure, for example, when the maximum use of data area n = 2 is designated for a certain content, in accordance with the license L6, use of data contained in two or less data areas (use 1 and use 2) are permitted in the restriction removing time T and use of data contained in three or more data areas (use 3) is restricted.

FIG. 21 illustrates a license that restricts a total use time of all data areas and area use time of each data area without restricting the data area as the permission range. In usage conditions of a license L7, any start position flag is designated instead of the permission range, and the maximum area use time C and the maximum total use time O are designated. Use of the data is restricted in such a manner that area use times P1, P2 and P3 of data 1, 2, and 3, respectively are less than C and the total use time P1 + P2 + P3 of the data 1, 2, and 3 is less than the maximum total use time O. With this structure, for a certain content, use of the data areas for the area use time exceeding the maximum area use time C is restricted and the use of all data areas for the total use time exceeding the maximum total use time O is restricted in accordance with the license L7. For example, in the example of FIG. 21, the area use times P1, P2, and P3 of the data 1, 2, 3, respectively, are less than C, and therefore, the use of the data 1, 2, and 3 (uses 1, 2, and 3) is not restricted. However, if use of the data 3 (use 3) is started following uses of the data 1 and 2 (uses 1 and 2) and the total use time P1 + P2 + P3' exceeds the maximum total use time O at a point when use time of the data 3 reaches P3', the use of the data 3 (use 3) is stopped and the data use is restricted.

Here, in the usage conditions of the licenses illustrated in FIGS. 16 to 21, the permission range (StartAU, NumAU) is designated, however, any start position flag may be designated instead of the permission range.

FIG. 22 illustrates a data structure of a memory device 251, principal functional structures of a usage restriction part 255 and a content use part 253 and a data flow.

As illustrated in FIG. 22, in the content distribution method according to this embodiment, every time a new license is used, possession of the license is checked in the processing of step S131 of FIG. 14, and the usage condition judgment part 271 refers to a use history of the data. Each time the license is used, a content ID, a permission range or actual usage range, a use time and the like contained in usage conditions of the license are recorded in the memory device 251 as use history.

Then, the usage condition judgment part 271 uses the use history of the data as a basis to check if it meets usage conditions of the new license. Then, when it meets the usage conditions, the processing of step S133 and later is performed and when it does not meet the usage conditions, an error response is given (S137).

[3-2. CONCLUSION]

As described above, according to the content distribution method according to the second embodiment, the license contains the usage conditions that specify the use method of one or more content data based on the use history of the data contained in one or more data areas of one or more content data, and when the content data are used while satisfying the usage conditions, a segment key SKey of each of one or more segments to which data contained in a certain data area belongs is generated. Therefore, use of the content can be restricted based on the use history of the data contained in one or more data areas in one or more content data.

[4. HARDWARE CONFIGURATION]

Next, description is made, with reference to FIG. 23, about the hardware configuration of the control server 130 according to the embodiment of the present invention. FIG. 23 is a block diagram illustrating the hardware configuration of the control server 130.

The control server 130 mainly includes a CPU 901, a ROM 903, a RAM 905, a host bus 907, a bridge 909, an external bus 911, an interface 913, an input device 915, an output device 917, a storage device 919, a drive 921, a connection port 923 and a communication device 925.

The CPU 901 serves as an arithmetic processing device and controlling device and controls the operation of the control server 130, at least partially, in accordance with various programs recorded in the ROM 903, the RAM 905, the storage device 919, or a removable recording medium 927. The ROM 903 stores programs, parameters and the like used in the CPU 901. The RAM 905 temporarily stores programs executed by the CPU 901, parameters for execution of the programs and the like. The CPU 901, the ROM 903 and the RAM 905 are connected to each other with the host bus 907. The host bus 907 is connected to the external bus 911 via the bridge 909.

The input device 915 is operating means for a user to operate, such as a mouse, a keyboard, a touch panel, a button, a switch or the like. The input device 915 may be, for example, remote operating means using electric wave such as infrared ray or the like or an external device 929 such as a portable phone or PDA corresponding to the operation of the control server 130. The input device 915 is configured to include, for example, an input control circuit or the like for generating an input signal based on operation information input by the user with use of the above-mentioned operating means and outputting the signal to the CPU 901. The user of the control server 130 operates the input device 915 to input various data to the control server 130 and instruct the processing operations.

The output device 917 includes a device capable of notifying users of obtained information visually and acoustically, such as a printer, a portable phone or a facsimile, a display device including a CRT display, a liquid crystal display or a lamp, a sound output device such as a speaker or a headphone. The output device 917 outputs processing results of the control server 130. For example, the display device displays the processing results of the control server 130 as text or image information, and the sound output device converts audio signals of replayed sound data, acoustic data and the like into analogue signals and outputs them.

The storage device 919 is a device for storing data, including, for example, a magnetic storage device such as HDD, a semiconductor storage device, an optical storage device, a magnetooptical storage device or the like. The storage device 919 stores programs executed by the CPU 901, various data and data obtained externally.

The drive 921 is a reader/writer for a recording medium and mounted in or externally to the control server 130. The drive 921 reads recorded data from the removable recording medium 927, such as a magnetic disk, an optical disk, a magnetooptical disk, a semiconductor memory or the like, outputs the data to the RAM 905 and writes the data to be recorded.

The connection port 923 is a port for directly connecting the external device 929 to the control server 130, such as a USB port, a SCSI port, a RS232C port or the like. The control server 130 obtains data and provides data via the connection port 923, from and to the external device 929 connected to the connection port 923.

The communication device 925 is a communication interface having a communication device for connecting to the communication network 3. The communication device 925 is, for example, a wire or wireless LAN, a WUSB communication card, ADSL router, a communication modem or the like. The communication device 925 performs transmission and reception of signals based on a predetermined protocol with Internet or other communication devices, for example. The communication network 3 connected to the communication device 925 is a wired or radio network or the like, and may be, for example, Internet, home LAN, infrared data communication, radio wave communication, satellite communication or the like.

Description up to this point has been made about one example of the hardware configuration for realizing the functions of the control server 130. Each structural element of the above-described hardware may be configured of a general-purpose device or a device specific to the function of each structural element. Further, as the hardware configurations of the user terminals 200 and 250 according to the embodiments of the present invention are almost the same as the hardware configuration of the control server 130 described above, duplicate explanation is omitted here.

It should be understood by those skilled in the art that various modifications, combinations, sub-combinations and alterations may occur depending on design requirements and other factors insofar as they are within the scope of the appended claims or the equivalents thereof.

The present application contains subject matter related to that disclosed in Japanese Priority Patent Application JP 2009-32026 filed in the Japan Patent Office on 13 February 2009, the entire content of which is hereby incorporated by reference.

Further aspects and features of the present invention are defined in the appended claims. Various combinations of the features defined in the dependent claims may be made with those of the independent claims other than that explicitly recited in the claims dependency.

A further example content distribution method may comprise:

A program for causing a computer to execute a content distribution method, comprising the steps of:

in order to decrypt data of each of a plurality of segments divided in content data, the data being encrypted with a segment key generated from information unique to the segment, generating the segment key of the segment to which the data contained in a certain data area in the content data belongs based on a license that allows generation of the segment key; and
decrypting the data encrypted and contained in the certain data area, with the segment key of each of the segments to which the data belongs.

## Claims

**1.** A content distribution apparatus, comprising:

an encrypting part for encrypting data of each of a plurality of segments divided in content data with a segment key generated from information unique to the segment; and
a license generator for generating a license that allows generation of the segment key for one or more segments to which the data contained in a certain data area in the content data belongs.

**2.** The content distribution apparatus according to claim 1, wherein the license includes usage conditions that specify usage of the content data based on a use history of the data contained in one or more data area in one or more content data, and when the content data is used while satisfying the usage conditions, the license allows generation of the segment key for the one or more segments or each of the segments to which the data contained in the certain data area belongs.

**3.** The content distribution apparatus according to claim 1, wherein the license includes usage conditions that specify a predetermined data area in the content data as a use permission range, and when the content data is used while satisfying the usage conditions, the license allows generation of the segment key for each of the one or more segments to which the data contained in the certain data area belongs.

**4.** The content distribution apparatus according to claim 1, wherein the information unique to the segment is position information indicating a position of the segment in the content data.

**5.** The content distribution apparatus according to claim 4, wherein the segment key of the segment is generated based on the position information of the segment in the content data and a content key used in encryption of the content data.

**6.** The content distribution apparatus according to claim 5, wherein the position information in the content data of the segment to which the data contained in the certain data area belongs is expressed by a relative position of the data in the certain data area and an absolute position of a start point of the certain data area in the content data.

**7.** A content use apparatus, comprising:

a segment key generator for, in order to decrypt data of each of a plurality of segments divided in content data, the data being encrypted with a segment key generated from information unique to the segment, generating the segment key of the one or more segments to which the data contained in a certain data area in the content data belongs based on a license that allows generation of the segment key; and
a decrypting unit for decrypting the data encrypted and contained in the certain data area, with the segment key of each of the segments to which the data belongs.

**8.** The content use apparatus according to claim 7, wherein the license includes usage conditions that specify usage of the content data based on a use history of the data contained in the one or more data areas in the one or more content data, and
the content use apparatus further comprises a usage restriction part for, when the content data is used while not satisfying the usage conditions, restricting generation of the segment key for the one or more segments or each of the segments to which the data contained in the certain data area belongs.

**9.** The content use apparatus according to claim 7, wherein the license includes usage conditions that specify a predetermined data area in the content data as a use permission range, and
the content use apparatus further comprises a usage restriction part for, when the content data is used while not satisfying the usage conditions, restricting generation of the segment key for the one or more segments or each of the segments to which the data contained in the certain data area belongs.

**10.** The content use apparatus according to claim 7, wherein the information unique to the segment is position information indicating a position of the segment in the content data.

**11.** The content use apparatus according to claim 10, wherein the segment key of the segment is generated based on the position information of the segment in the content data and a content key used in encryption of the content data.

**12.** The content use apparatus according to claim 11, wherein the position information in the content data of the segment to which the data contained in the certain data area belongs is expressed by a relative position of the data in the certain data area and an absolute position of a start point of the certain data area in the content data.

**13.** A content distribution system, comprising:

a content distribution apparatus including

an encrypting part for encrypting data of each of a plurality of segments divided in content data with a segment key generated from information unique to the segment and
a license generator for generating a license that allows generation of the segment key for the one or more segments to which the data contained in a certain data area in the content data belongs; and

a content use apparatus having

a segment key generator for generating the segment key of the segment to which the data contained in the certain data area belongs based on the license and
a decrypting unit for decrypting the data encrypted and contained in the certain data area, with the segment key of the segment to which the data belongs.

**14.** A content distribution method, comprising the steps of:

encrypting data of each of a plurality of segments divided in content data with a segment key generated from information unique to the segment;
generating a license that allows generation of the segment key for the one or more segments to which the data contained in a certain data area in the content data belongs;
generating the segment key of the segment to which the data contained in the certain data area belongs based on the license; and
decrypting the data encrypted and contained in the certain data area, with the segment key of the segment to which the data belongs.

**15.** A program for causing a computer to execute a content distribution method according to claim 14.

**FIG.1**

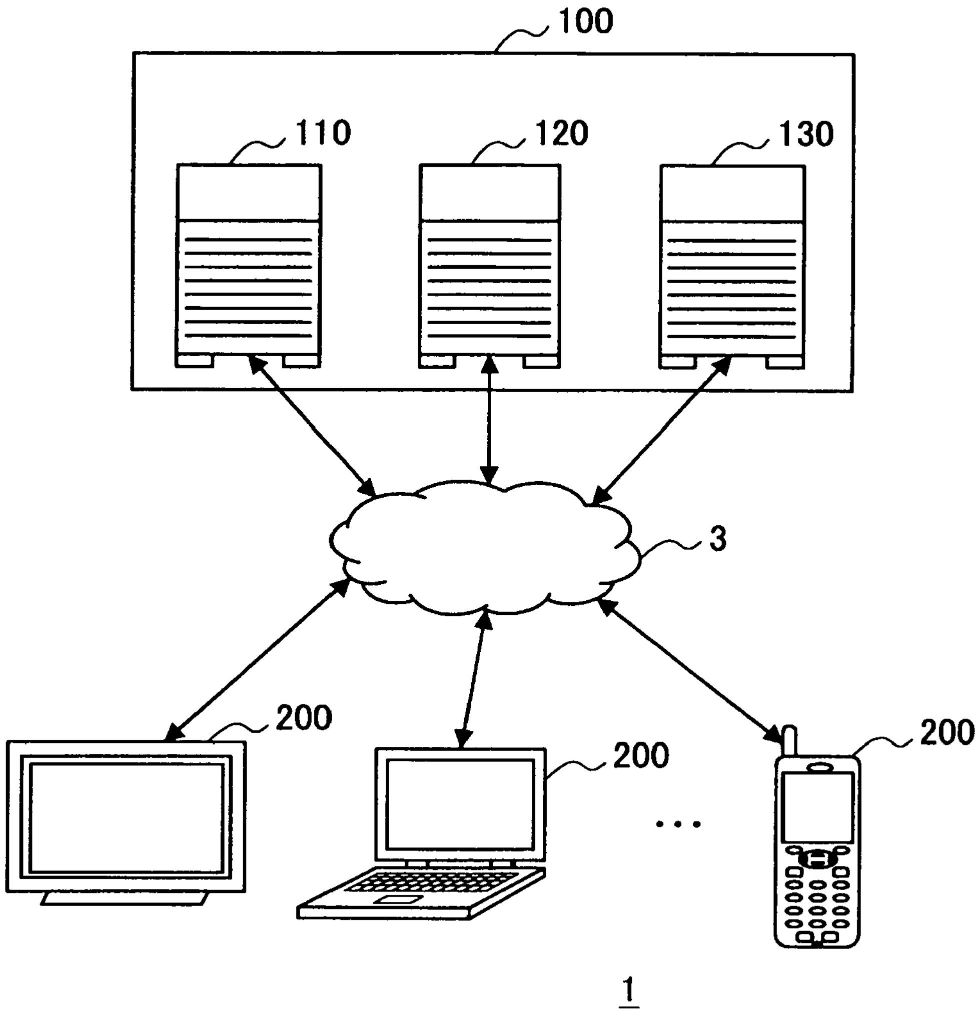

FIG.2

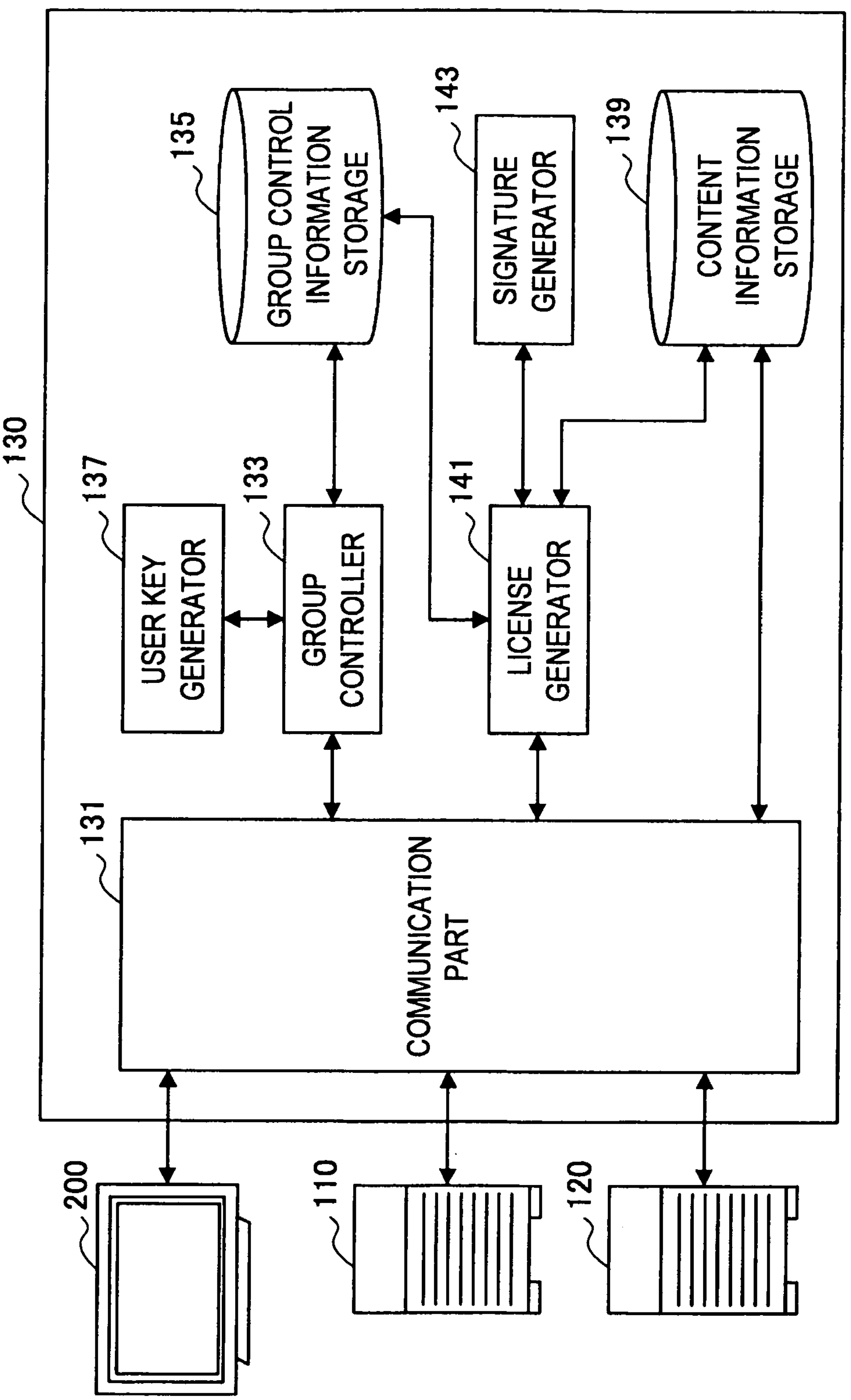
130
131
COMMUNICATION PART
133
GROUP CONTROLLER
135
GROUP CONTROL INFORMATION STORAGE
137
USER KEY GENERATOR
139
CONTENT INFORMATION STORAGE
141
LICENSE GENERATOR
143
SIGNATURE GENERATOR
200
110
120

# FIG.3

| USER ID | USER KEY (UKey) | TERMINAL ID | | |
|---|---|---|---|---|
| Yamagishi | USER KEY A | A41342 | - | |
| Osaki | USER KEY B | A83188 | B76322 | |
| ⋮ | ⋮ | ⋮ | ⋮ | |

FIG.4

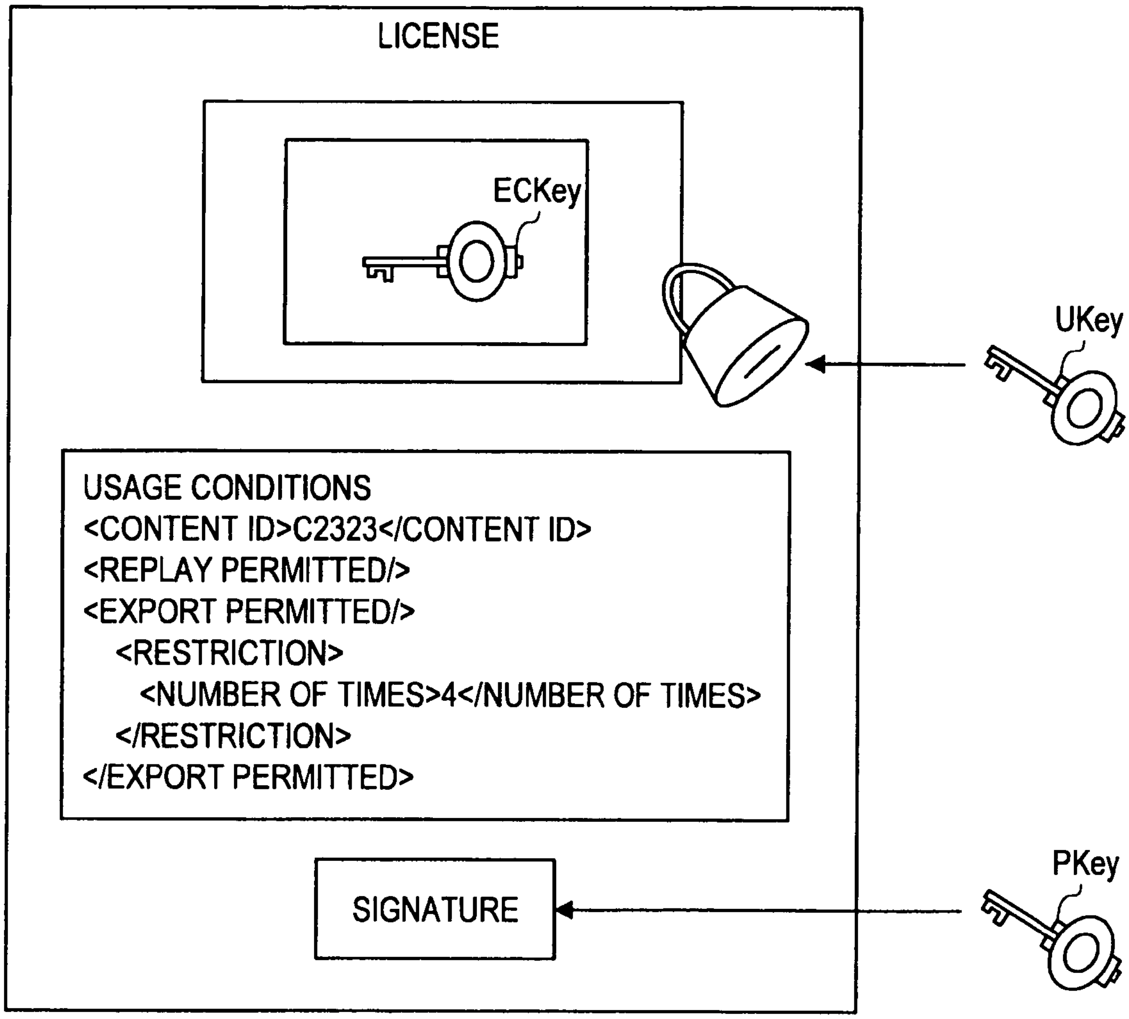
LICENSE
ECKey
UKey
USAGE CONDITIONS
<CONTENT ID>C2323</CONTENT ID>
<REPLAY PERMITTED/>
<EXPORT PERMITTED/>
<RESTRICTION>
<NUMBER OF TIMES>4</NUMBER OF TIMES>
</RESTRICTION>
</EXPORT PERMITTED>
PKey
SIGNATURE

**FIG.5**

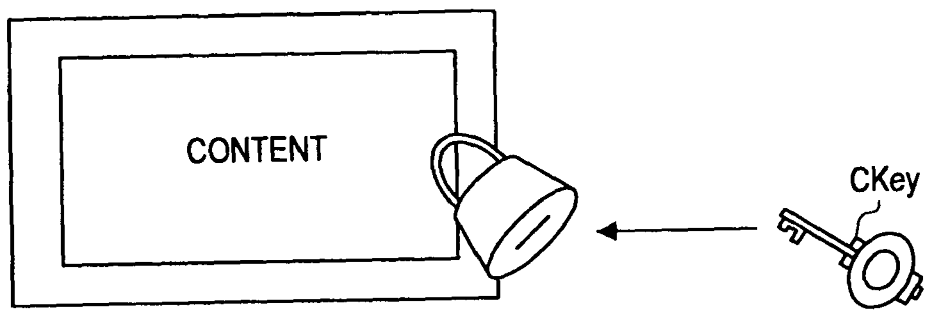

FIG.6

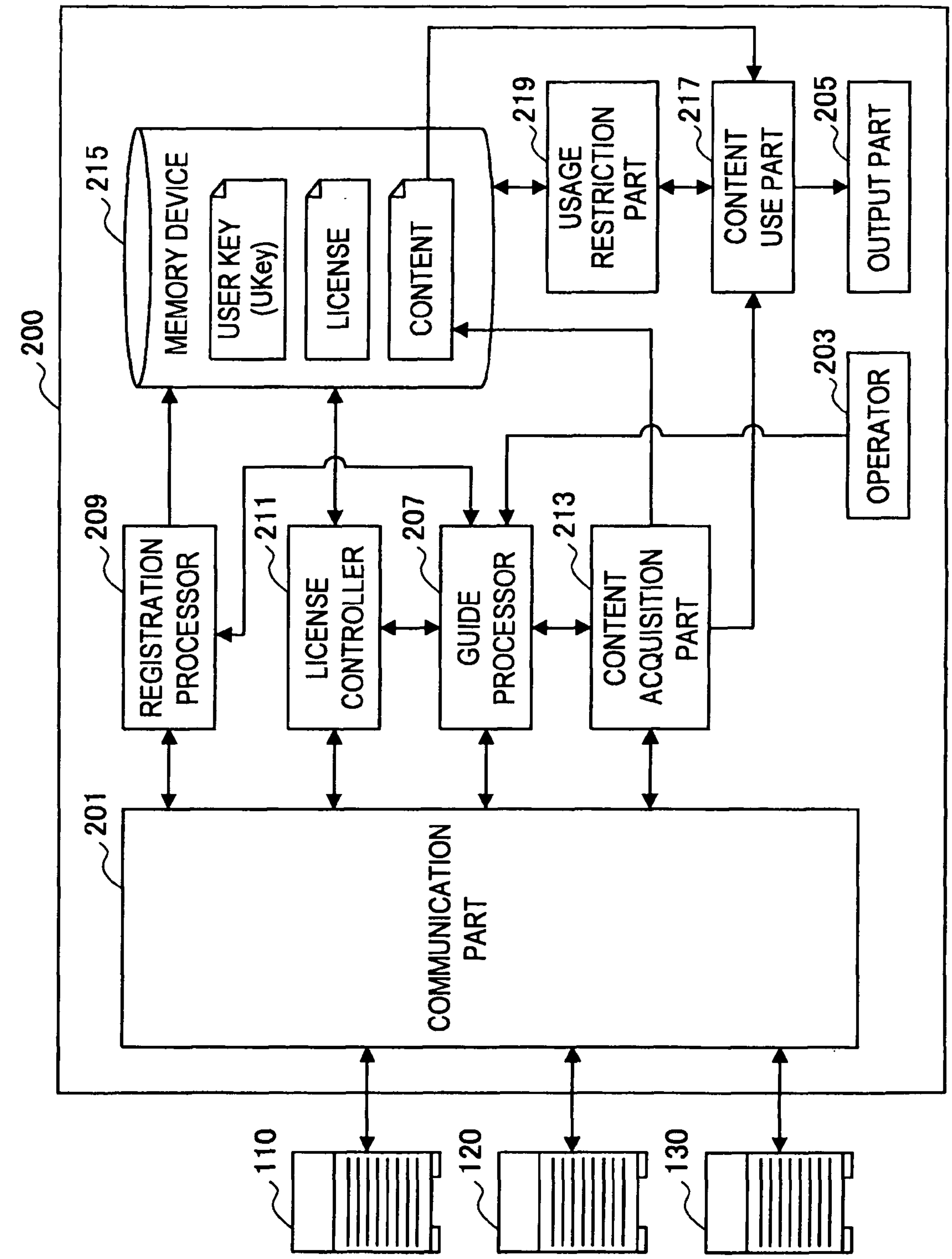
200
215
MEMORY DEVICE
USER KEY (UKey)
LICENSE
CONTENT
219
USAGE RESTRICTION PART
217
CONTENT USE PART
205
OUTPUT PART
203
OPERATOR
209
REGISTRATION PROCESSOR
211
LICENSE CONTROLLER
207
GUIDE PROCESSOR
213
CONTENT ACQUISITION PART
201
COMMUNICATION PART
110
120
130

FIG.7

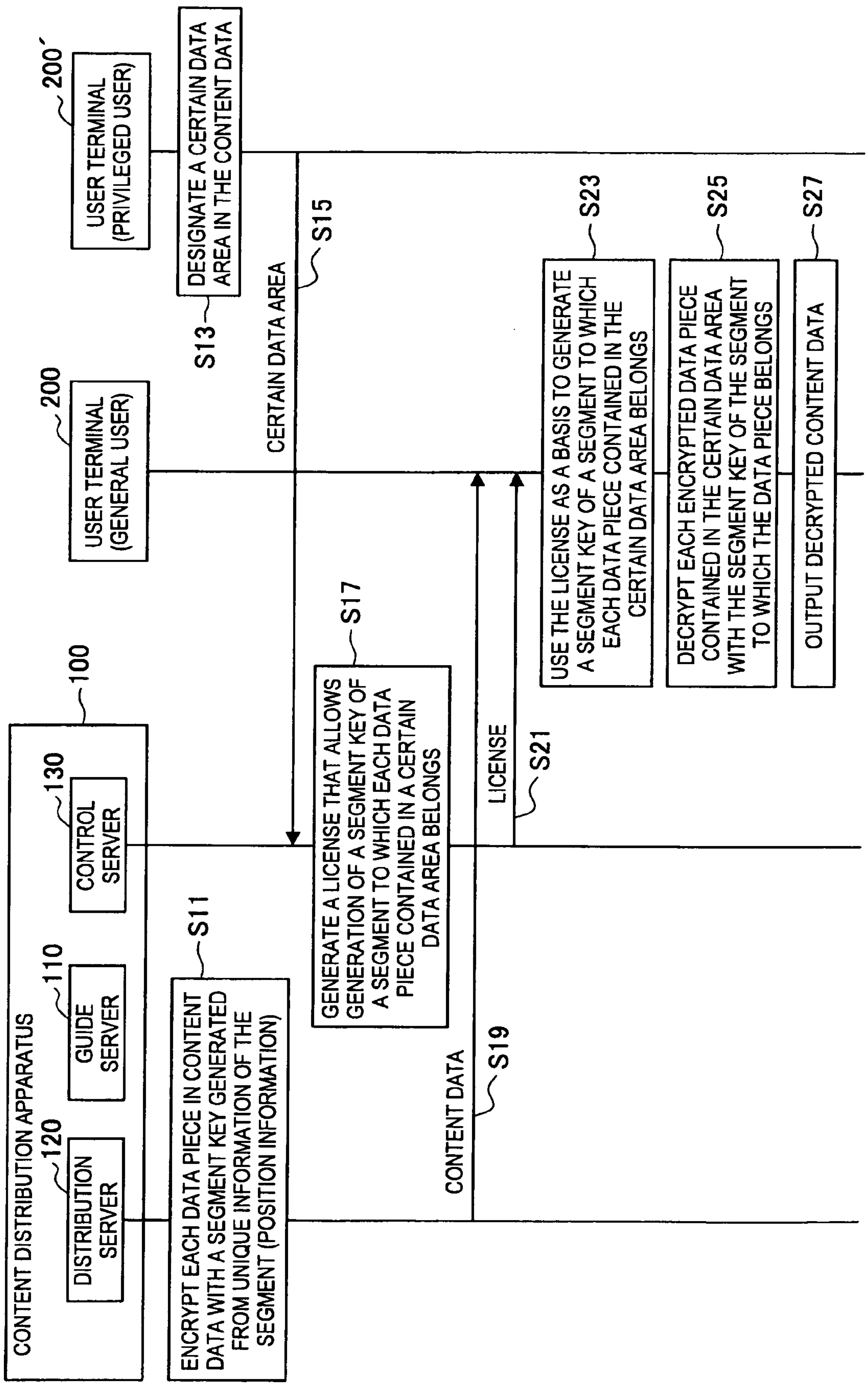
CONTENT DISTRIBUTION APPARATUS
100
DISTRIBUTION SERVER
120
GUIDE SERVER
110
CONTROL SERVER
130
USER TERMINAL (GENERAL USER)
200
USER TERMINAL (PRIVILEGED USER)
200´
S11
ENCRYPT EACH DATA PIECE IN CONTENT DATA WITH A SEGMENT KEY GENERATED FROM UNIQUE INFORMATION OF THE SEGMENT (POSITION INFORMATION)
S13
DESIGNATE A CERTAIN DATA AREA IN THE CONTENT DATA
S15
CERTAIN DATA AREA
S17
GENERATE A LICENSE THAT ALLOWS GENERATION OF A SEGMENT KEY OF A SEGMENT TO WHICH EACH DATA PIECE CONTAINED IN A CERTAIN DATA AREA BELONGS
S19
CONTENT DATA
S21
LICENSE
S23
USE THE LICENSE AS A BASIS TO GENERATE A SEGMENT KEY OF A SEGMENT TO WHICH EACH DATA PIECE CONTAINED IN THE CERTAIN DATA AREA BELONGS
S25
DECRYPT EACH ENCRYPTED DATA PIECE CONTAINED IN THE CERTAIN DATA AREA WITH THE SEGMENT KEY OF THE SEGMENT TO WHICH THE DATA PIECE BELONGS
S27
OUTPUT DECRYPTED CONTENT DATA

FIG.8

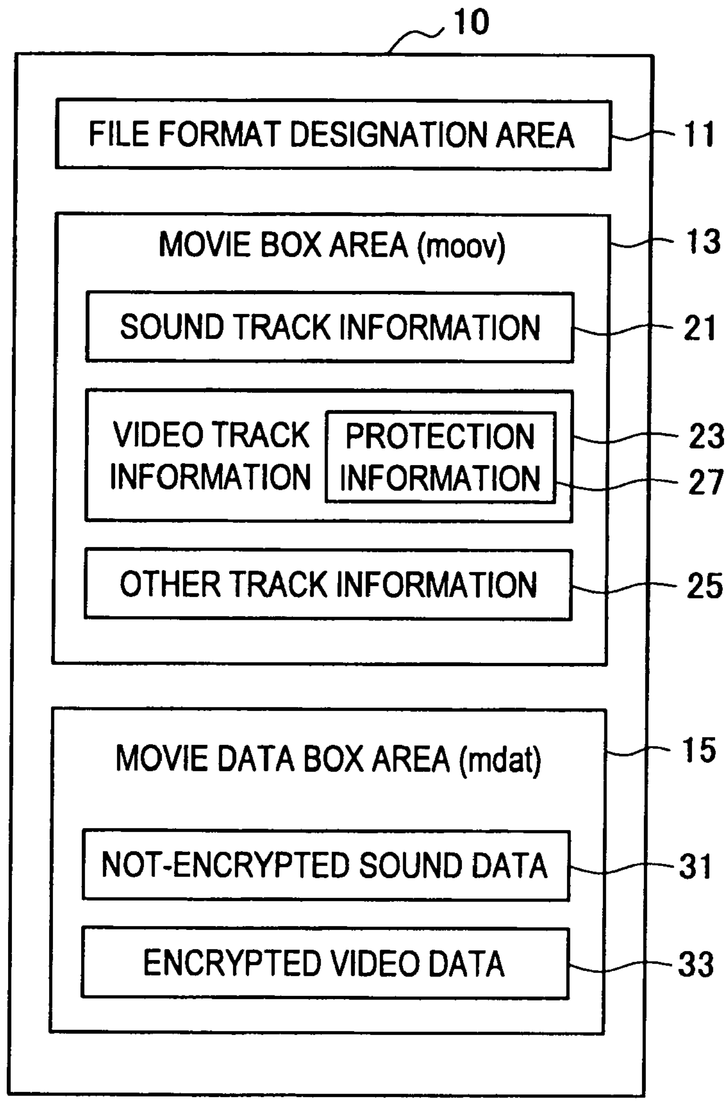
10
FILE FORMAT DESIGNATION AREA
11
MOVIE BOX AREA (moov)
13
SOUND TRACK INFORMATION
21
VIDEO TRACK INFORMATION
PROTECTION INFORMATION
23
27
OTHER TRACK INFORMATION
25
MOVIE DATA BOX AREA (mdat)
15
NOT-ENCRYPTED SOUND DATA
31
ENCRYPTED VIDEO DATA
33

FIG.9

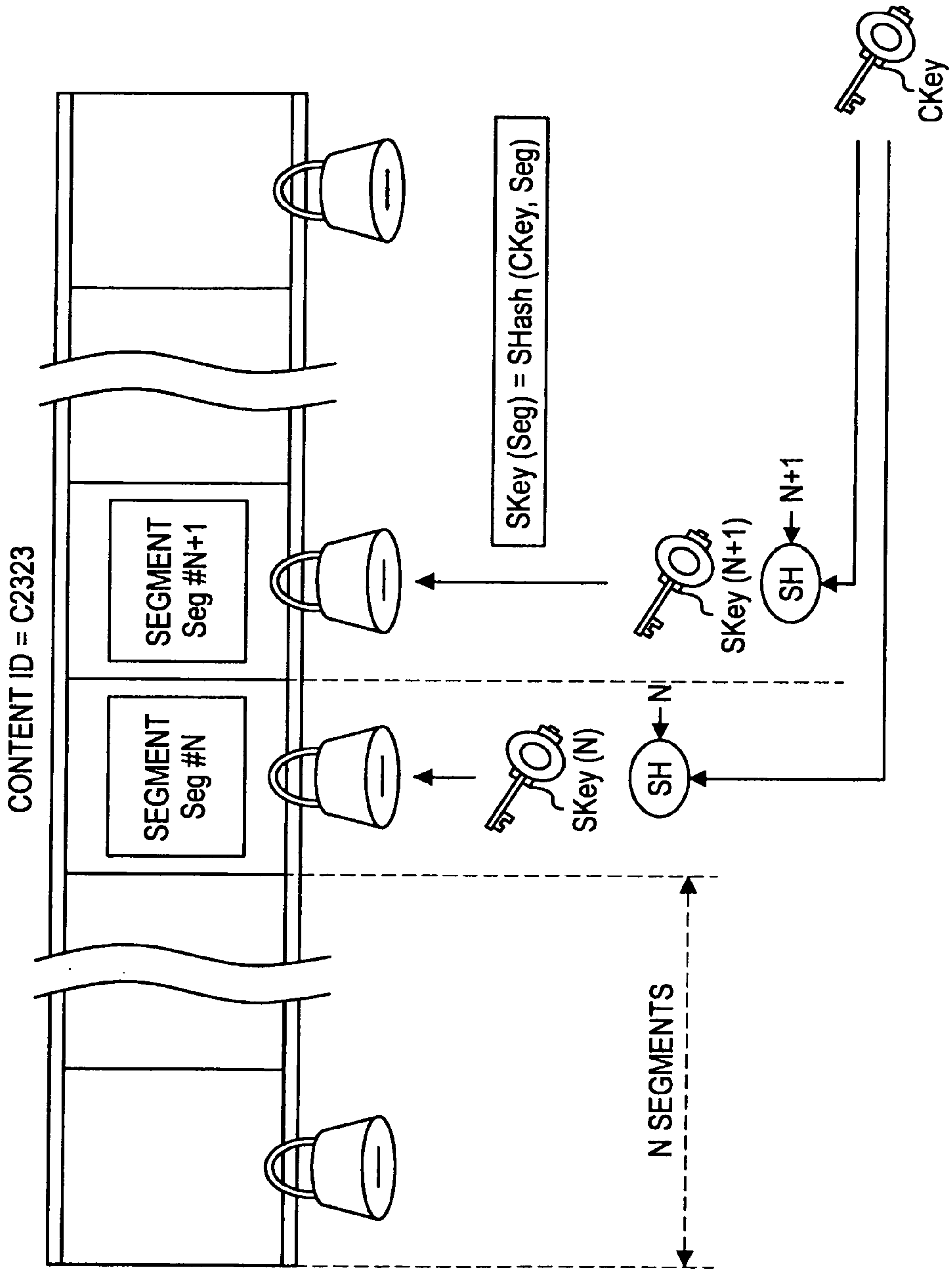
CONTENT ID = C2323
SEGMENT Seg #N
SEGMENT Seg #N+1
SKey (Seg) = SHash (CKey, Seg)
SKey (N)
SKey (N+1)
SH
N
N+1
CKey
N SEGMENTS

FIG.10

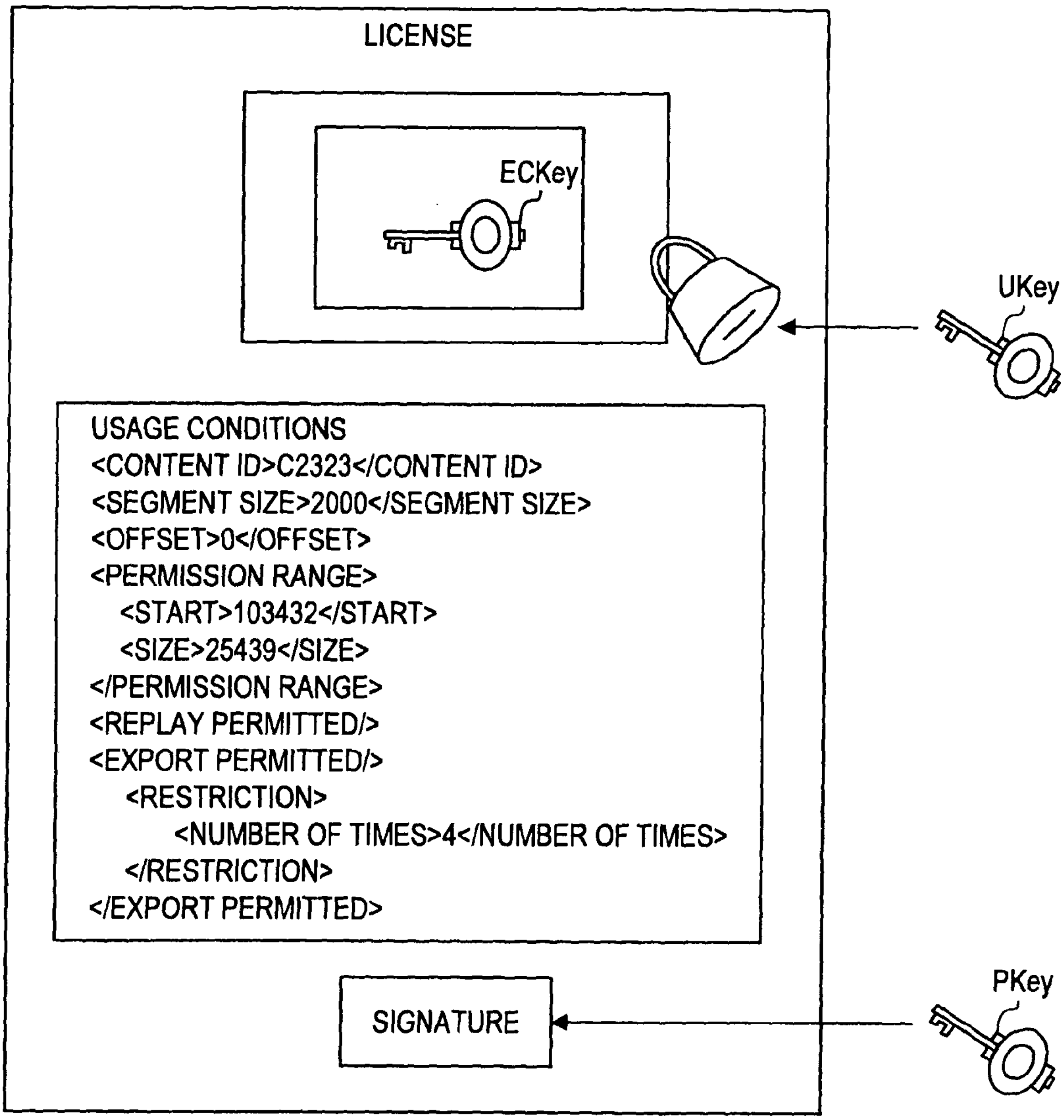
LICENSE
ECKey
UKey
USAGE CONDITIONS
<CONTENT ID>C2323</CONTENT ID>
<SEGMENT SIZE>2000</SEGMENT SIZE>
<OFFSET>0</OFFSET>
<PERMISSION RANGE>
<START>103432</START>
<SIZE>25439</SIZE>
</PERMISSION RANGE>
<REPLAY PERMITTED/>
<EXPORT PERMITTED/>
<RESTRICTION>
<NUMBER OF TIMES>4</NUMBER OF TIMES>
</RESTRICTION>
</EXPORT PERMITTED>
PKey
SIGNATURE

FIG.11

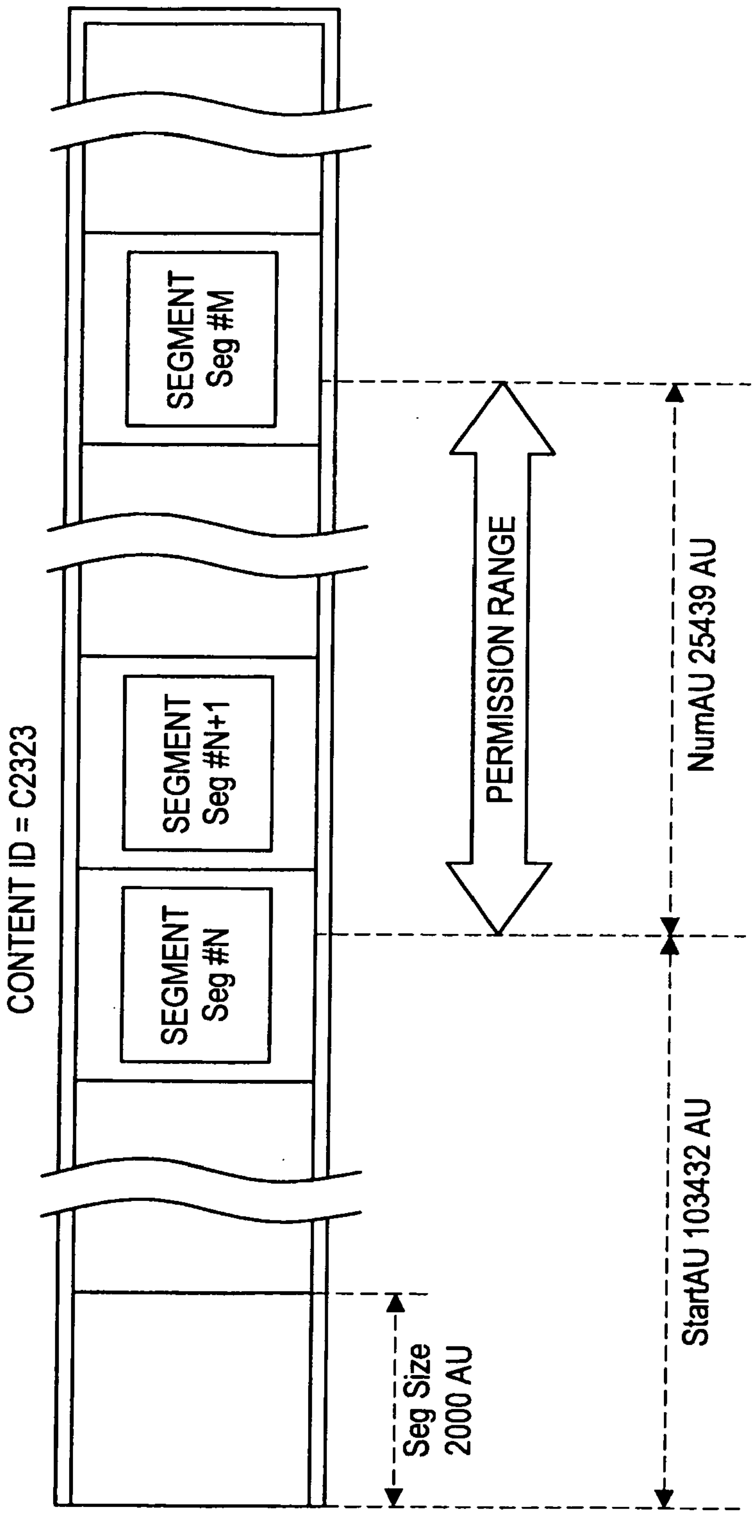
CONTENT ID = C2323
SEGMENT
Seg #M
SEGMENT
Seg #N+1
SEGMENT
Seg #N
PERMISSION RANGE
NumAU 25439 AU
StartAU 103432 AU
Seg Size
2000 AU

FIG.12

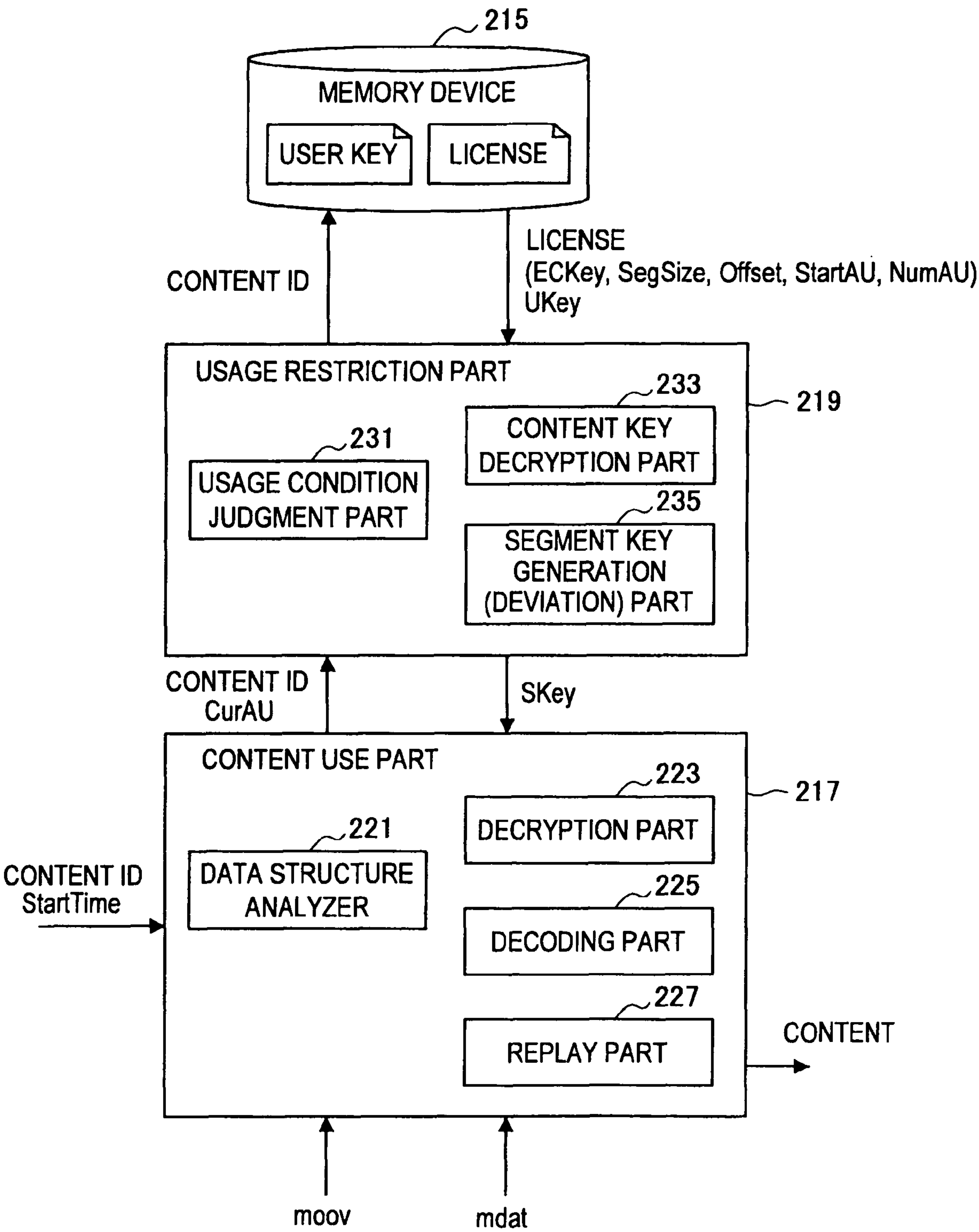
215
MEMORY DEVICE
USER KEY
LICENSE
CONTENT ID
LICENSE
(ECKey, SegSize, Offset, StartAU, NumAU)
UKey
USAGE RESTRICTION PART
219
233
CONTENT KEY DECRYPTION PART
231
USAGE CONDITION JUDGMENT PART
235
SEGMENT KEY GENERATION (DEVIATION) PART
CONTENT ID
CurAU
SKey
CONTENT USE PART
217
223
DECRYPTION PART
221
DATA STRUCTURE ANALYZER
CONTENT ID
StartTime
225
DECODING PART
227
REPLAY PART
CONTENT
moov
mdat

**FIG.13**

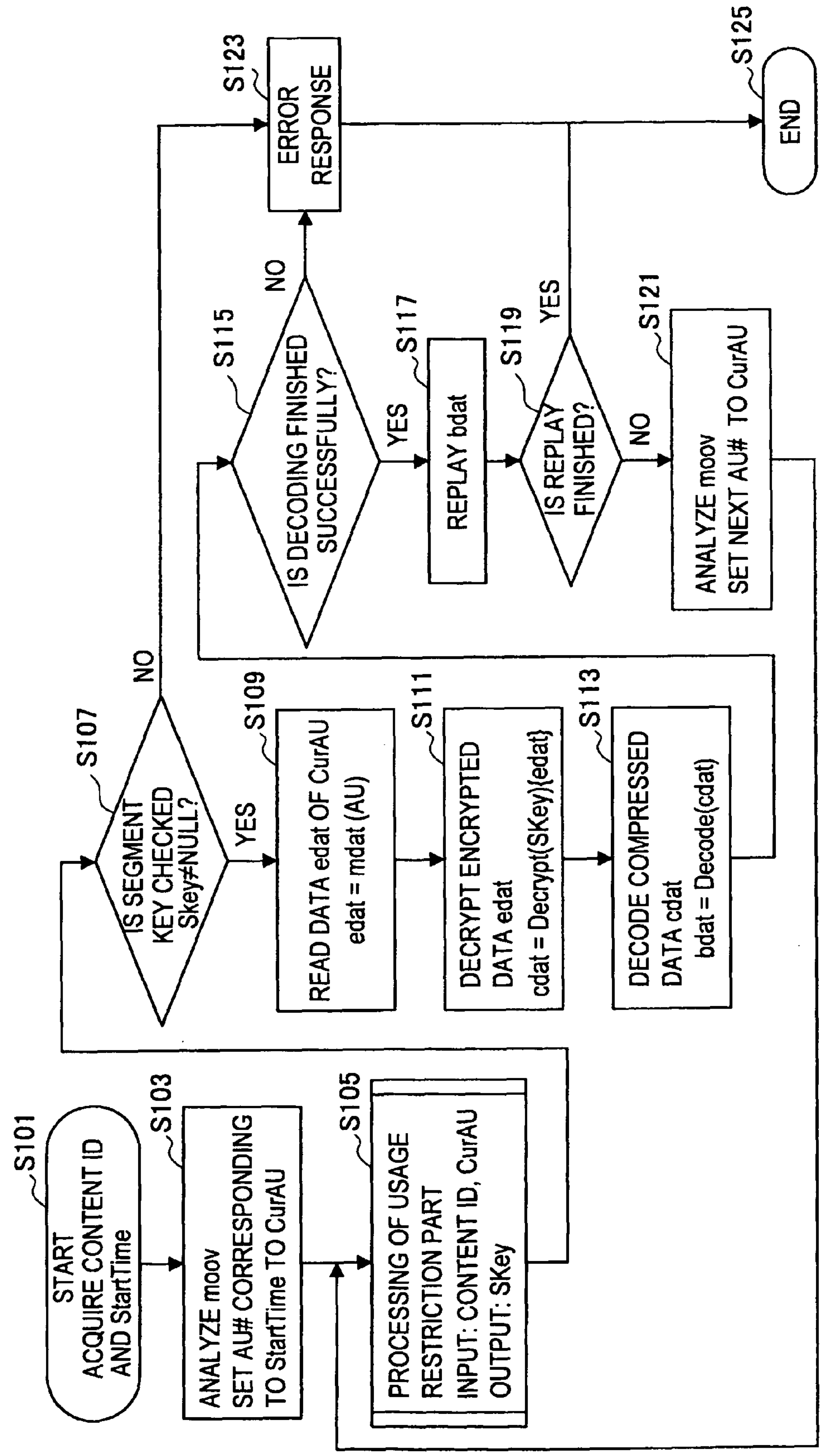
S101
START
ACQUIRE CONTENT ID
AND StartTime
S103
ANALYZE moov
SET AU# CORRESPONDING
TO StartTime TO CurAU
S105
PROCESSING OF USAGE
RESTRICTION PART
INPUT: CONTENT ID, CurAU
OUTPUT: SKey
S107
IS SEGMENT
KEY CHECKED
Skey≠NULL?
YES
NO
S109
READ DATA edat OF CurAU
edat = mdat (AU)
S111
DECRYPT ENCRYPTED
DATA edat
cdat = Decrypt(SKey){edat}
S113
DECODE COMPRESSED
DATA cdat
bdat = Decode(cdat)
S115
IS DECODING FINISHED
SUCCESSFULLY?
YES
NO
S117
REPLAY bdat
S119
IS REPLAY
FINISHED?
YES
NO
S121
ANALYZE moov
SET NEXT AU# TO CurAU
S123
ERROR
RESPONSE
S125
END

FIG.14

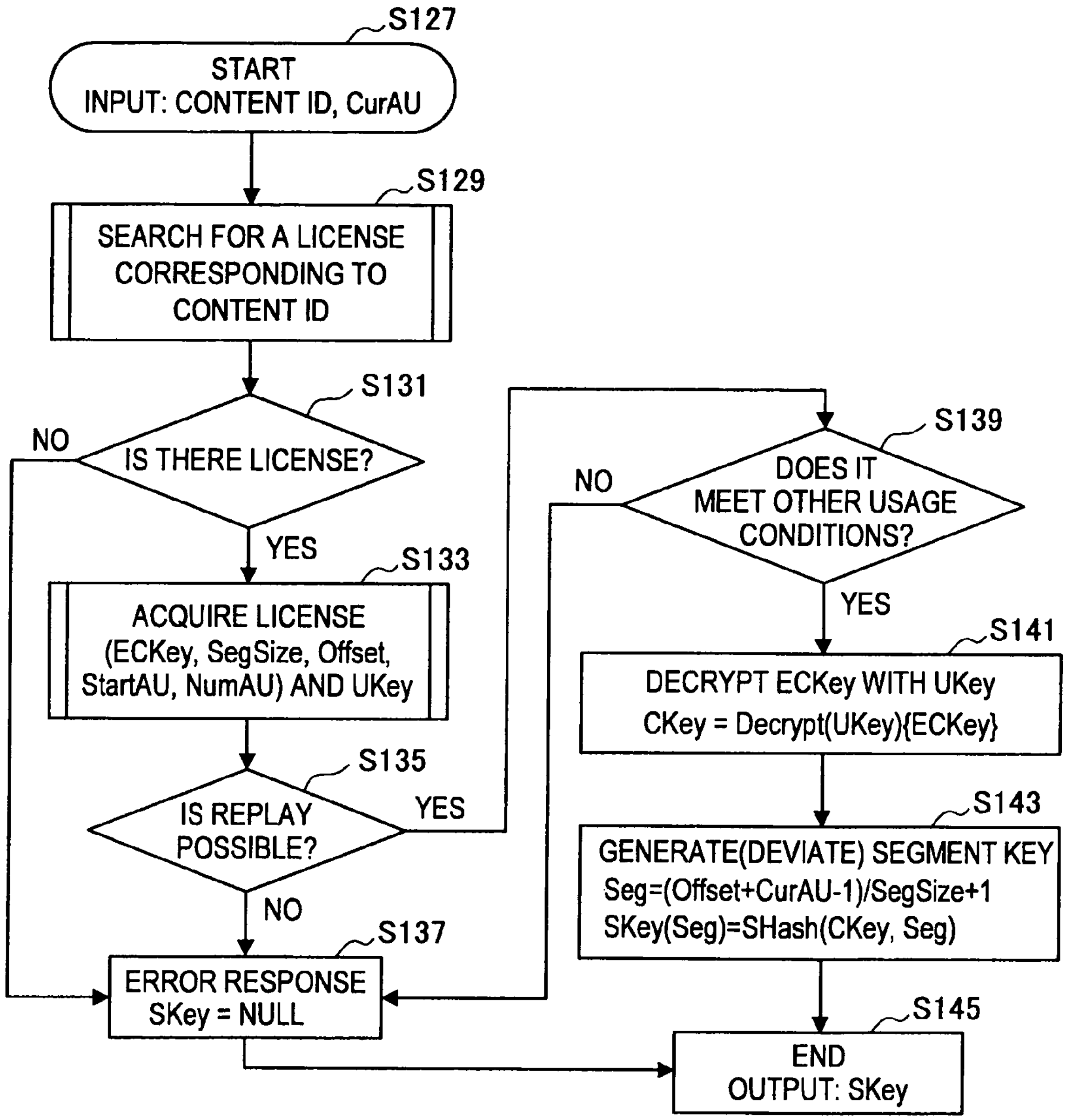
S127
START
INPUT: CONTENT ID, CurAU
S129
SEARCH FOR A LICENSE CORRESPONDING TO CONTENT ID
S131
IS THERE LICENSE?
NO
YES
S133
ACQUIRE LICENSE (ECKey, SegSize, Offset, StartAU, NumAU) AND UKey
S135
IS REPLAY POSSIBLE?
YES
NO
S137
ERROR RESPONSE
SKey = NULL
S139
DOES IT MEET OTHER USAGE CONDITIONS?
NO
YES
S141
DECRYPT ECKey WITH UKey
CKey = Decrypt(UKey){ECKey}
S143
GENERATE(DEVIATE) SEGMENT KEY
Seg=(Offset+CurAU-1)/SegSize+1
SKey(Seg)=SHash(CKey, Seg)
S145
END
OUTPUT: SKey

FIG.15

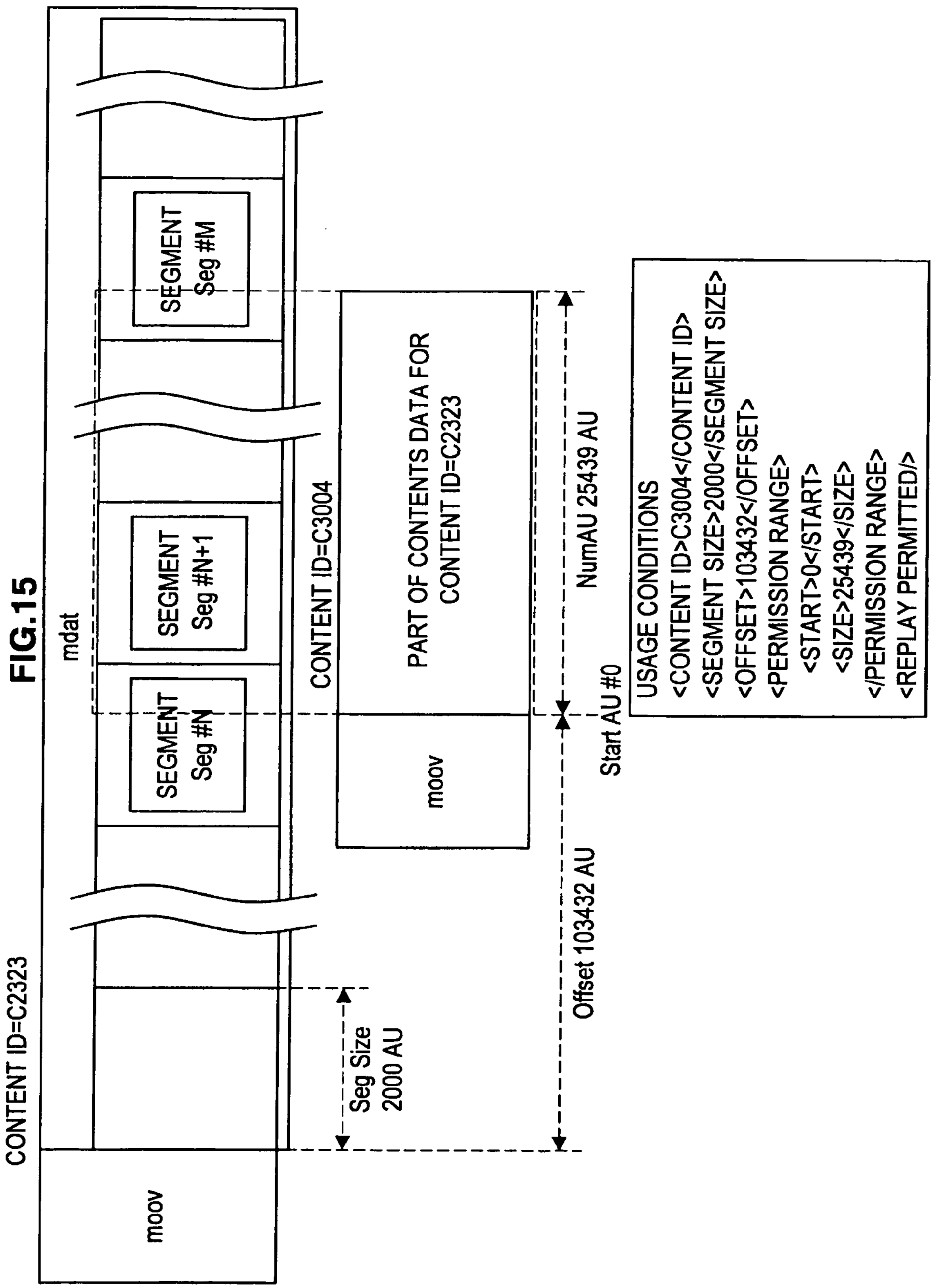
CONTENT ID=C2323
mdat
moov
SEGMENT Seg #N
SEGMENT Seg #N+1
SEGMENT Seg #M
Seg Size 2000 AU
CONTENT ID=C3004
moov
PART OF CONTENTS DATA FOR CONTENT ID=C2323
Offset 103432 AU
Start AU #0
NumAU 25439 AU
USAGE CONDITIONS
<CONTENT ID>C3004</CONTENT ID>
<SEGMENT SIZE>2000</SEGMENT SIZE>
<OFFSET>103432</OFFSET>
<PERMISSION RANGE>
<START>0</START>
<SIZE>25439</SIZE>
</PERMISSION RANGE>
<REPLAY PERMITTED/>

FIG.16

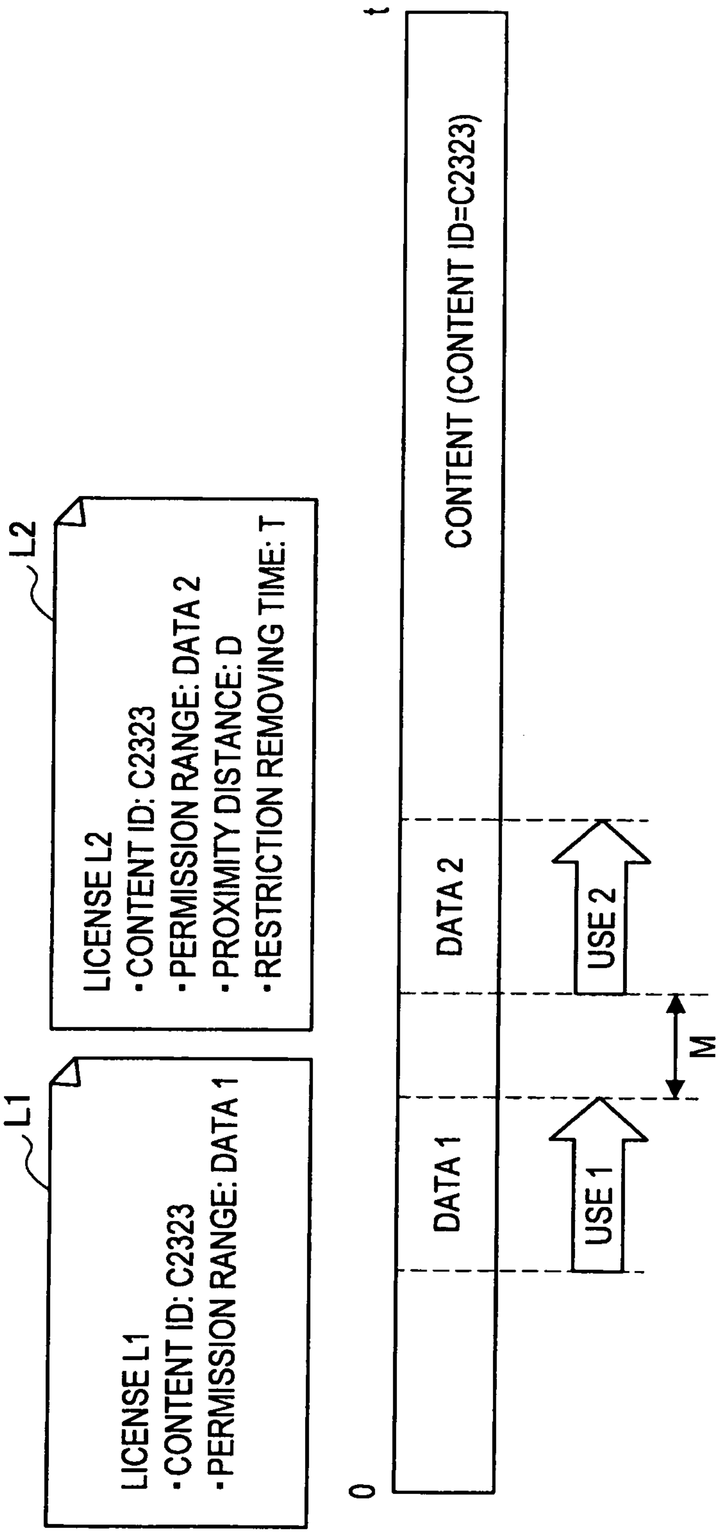
L1
LICENSE L1
·CONTENT ID: C2323
·PERMISSION RANGE: DATA 1
L2
LICENSE L2
·CONTENT ID: C2323
·PERMISSION RANGE: DATA 2
·PROXIMITY DISTANCE: D
·RESTRICTION REMOVING TIME: T
0
t
DATA 1
DATA 2
CONTENT (CONTENT ID=C2323)
USE 1
USE 2
M

# FIG.17

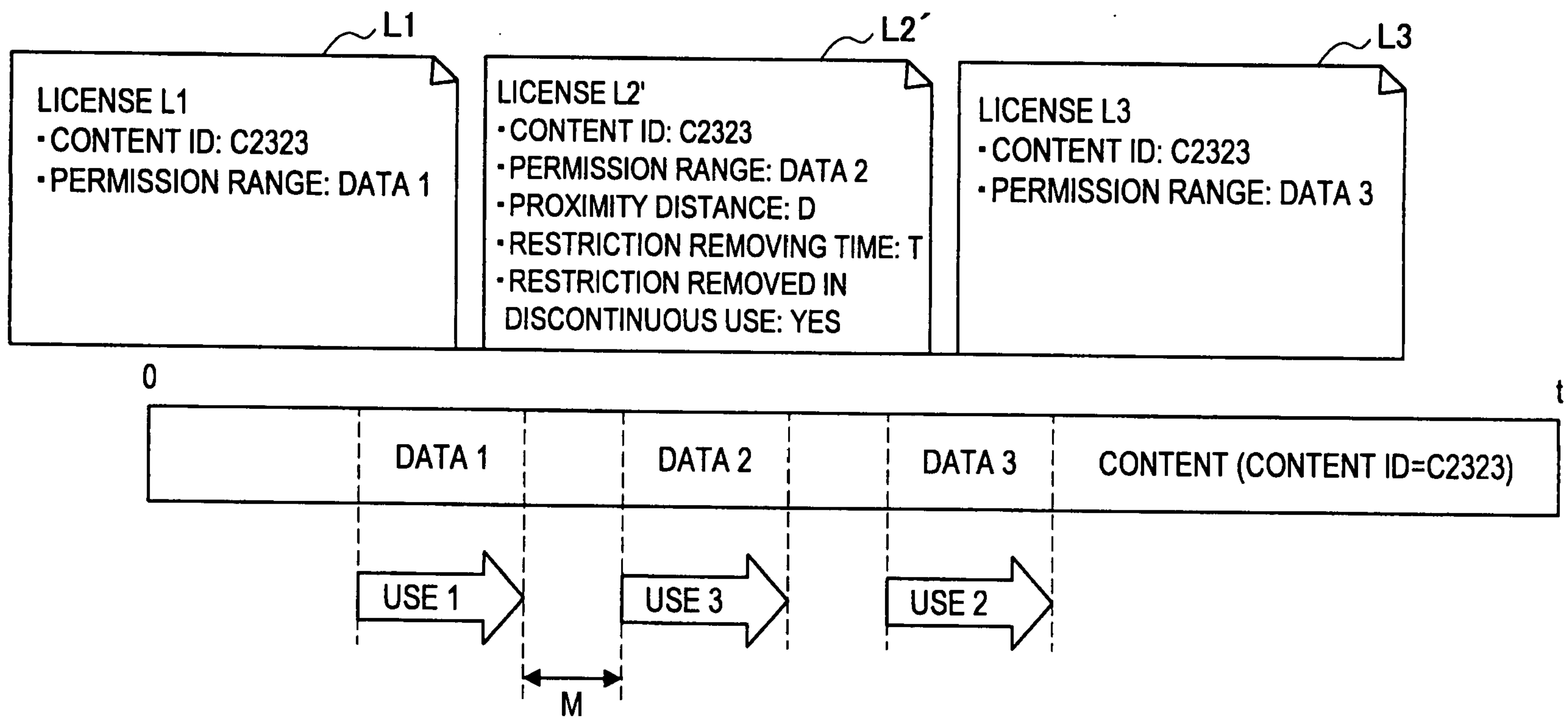
L1
LICENSE L1
•CONTENT ID: C2323
•PERMISSION RANGE: DATA 1
L2´
LICENSE L2'
•CONTENT ID: C2323
•PERMISSION RANGE: DATA 2
•PROXIMITY DISTANCE: D
•RESTRICTION REMOVING TIME: T
•RESTRICTION REMOVED IN DISCONTINUOUS USE: YES
L3
LICENSE L3
•CONTENT ID: C2323
•PERMISSION RANGE: DATA 3
0
t
DATA 1
DATA 2
DATA 3
CONTENT (CONTENT ID=C2323)
USE 1
USE 3
USE 2
M

FIG.18

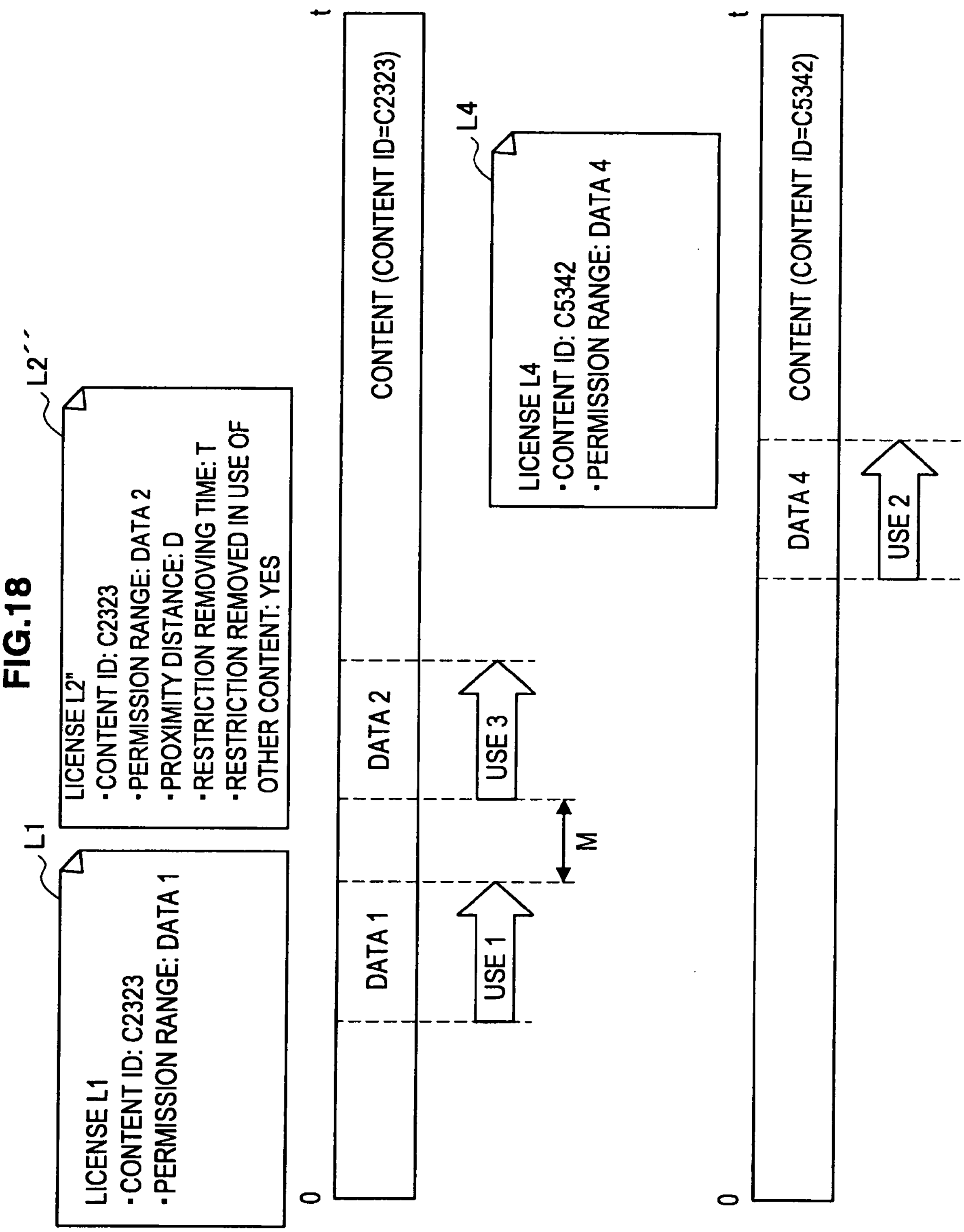
LICENSE L1
·CONTENT ID: C2323
·PERMISSION RANGE: DATA 1
L1
LICENSE L2"
·CONTENT ID: C2323
·PERMISSION RANGE: DATA 2
·PROXIMITY DISTANCE: D
·RESTRICTION REMOVING TIME: T
·RESTRICTION REMOVED IN USE OF OTHER CONTENT: YES
L2''
0
t
DATA 1
DATA 2
CONTENT (CONTENT ID=C2323)
USE 1
M
USE 3
LICENSE L4
·CONTENT ID: C5342
·PERMISSION RANGE: DATA 4
L4
0
t
DATA 4
CONTENT (CONTENT ID=C5342)
USE 2

FIG.19

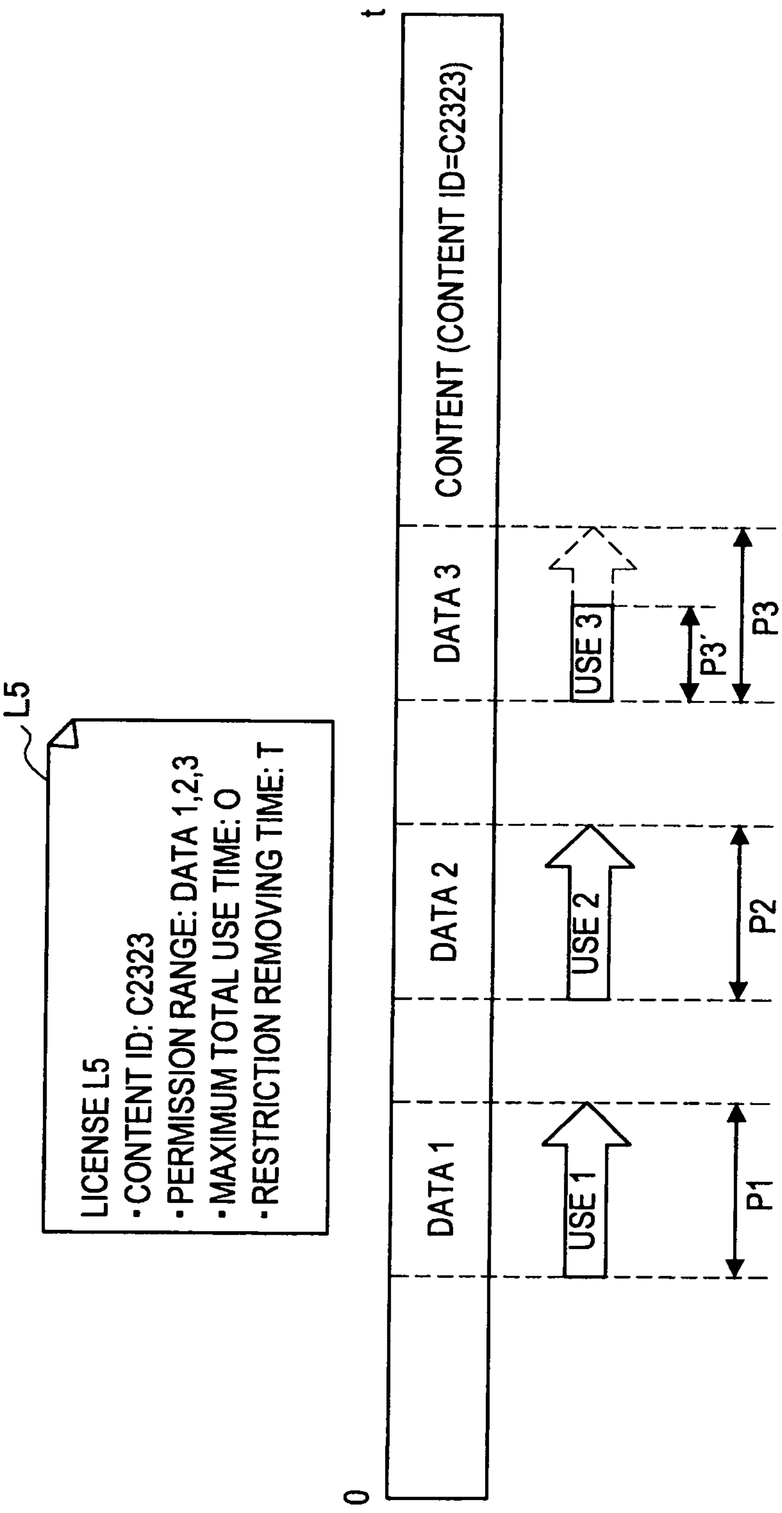
L5
LICENSE L5
·CONTENT ID: C2323
·PERMISSION RANGE: DATA 1,2,3
·MAXIMUM TOTAL USE TIME: O
·RESTRICTION REMOVING TIME: T
0
t
DATA 1
DATA 2
DATA 3
CONTENT (CONTENT ID=C2323)
USE 1
USE 2
USE 3
P1
P2
P3'
P3

FIG.20

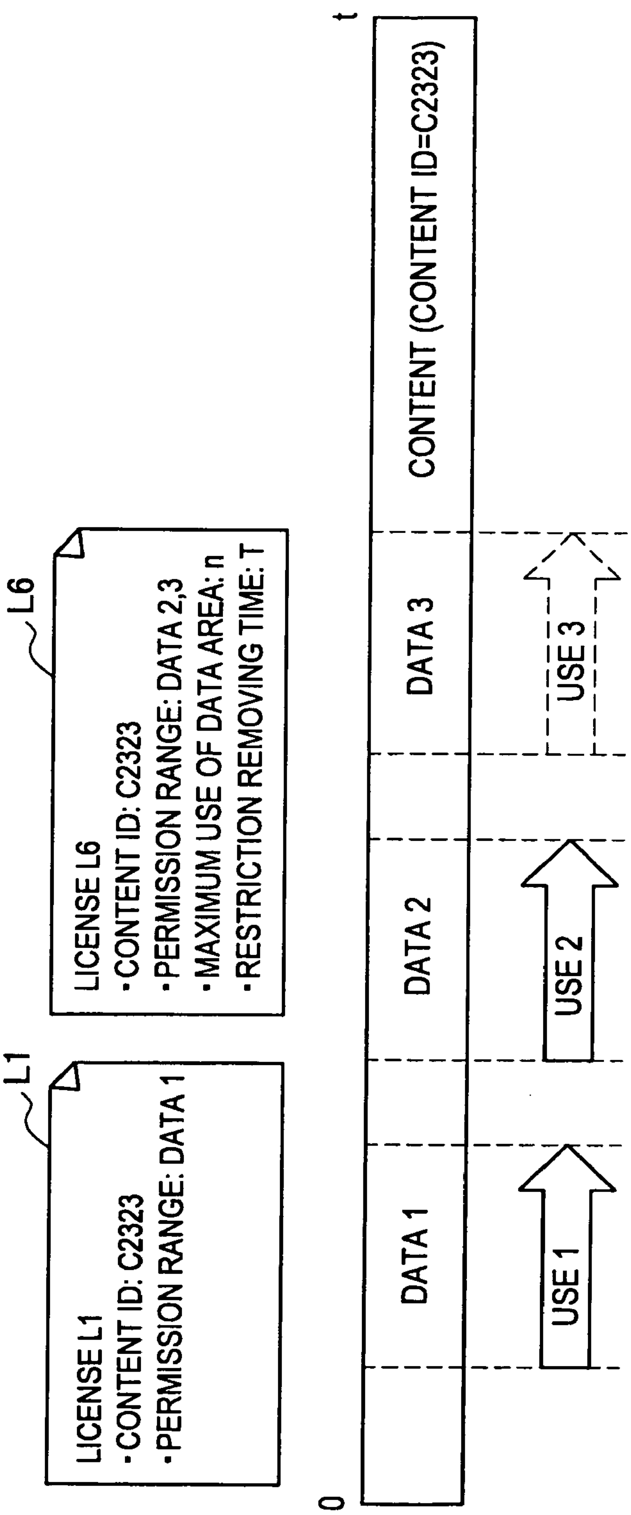
LICENSE L1
·CONTENT ID: C2323
·PERMISSION RANGE: DATA 1
L1
LICENSE L6
·CONTENT ID: C2323
·PERMISSION RANGE: DATA 2,3
·MAXIMUM USE OF DATA AREA: n
·RESTRICTION REMOVING TIME: T
L6
0
t
DATA 1
DATA 2
DATA 3
CONTENT (CONTENT ID=C2323)
USE 1
USE 2
USE 3

FIG.21

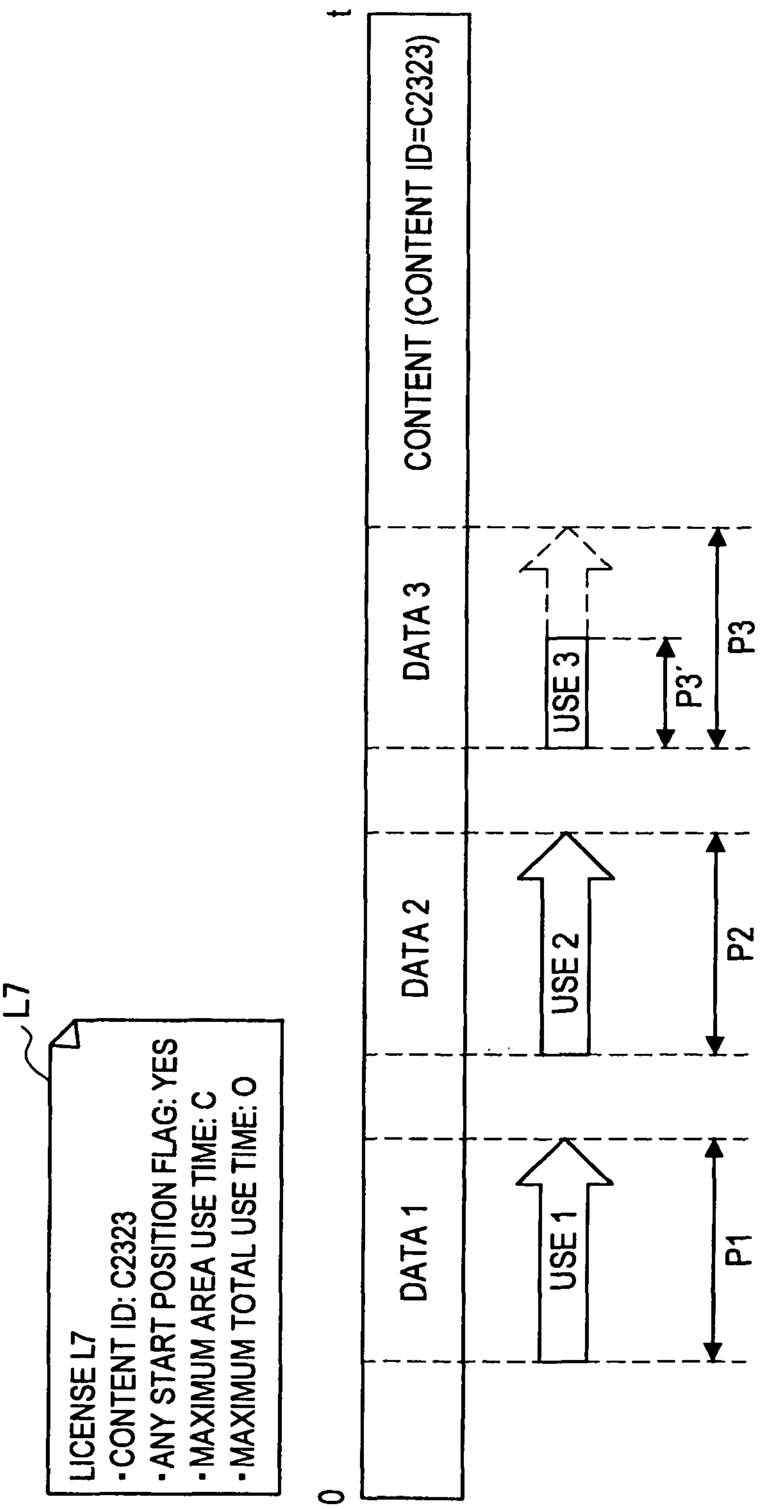
L7
LICENSE L7
·CONTENT ID: C2323
·ANY START POSITION FLAG: YES
·MAXIMUM AREA USE TIME: C
·MAXIMUM TOTAL USE TIME: O
0
t
CONTENT (CONTENT ID=C2323)
DATA 1
DATA 2
DATA 3
USE 1
USE 2
USE 3
P1
P2
P3
P3'

FIG.22

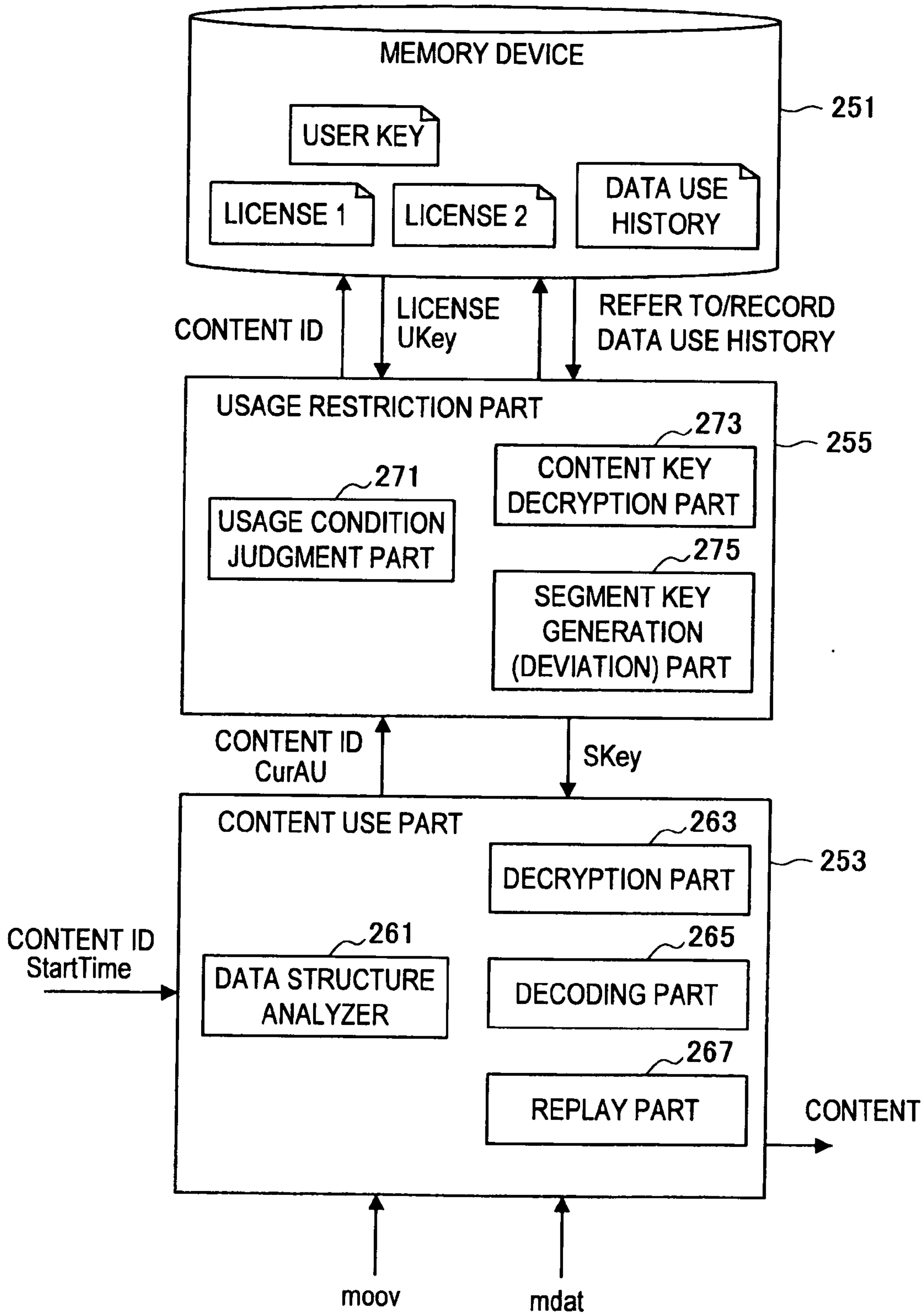
MEMORY DEVICE
USER KEY
LICENSE 1
LICENSE 2
DATA USE HISTORY
251
CONTENT ID
LICENSE
UKey
REFER TO/RECORD
DATA USE HISTORY
USAGE RESTRICTION PART
273
255
CONTENT KEY DECRYPTION PART
271
USAGE CONDITION JUDGMENT PART
275
SEGMENT KEY GENERATION (DEVIATION) PART
CONTENT ID
CurAU
SKey
CONTENT USE PART
263
253
DECRYPTION PART
CONTENT ID
StartTime
261
DATA STRUCTURE ANALYZER
265
DECODING PART
267
REPLAY PART
CONTENT
moov
mdat

FIG.23

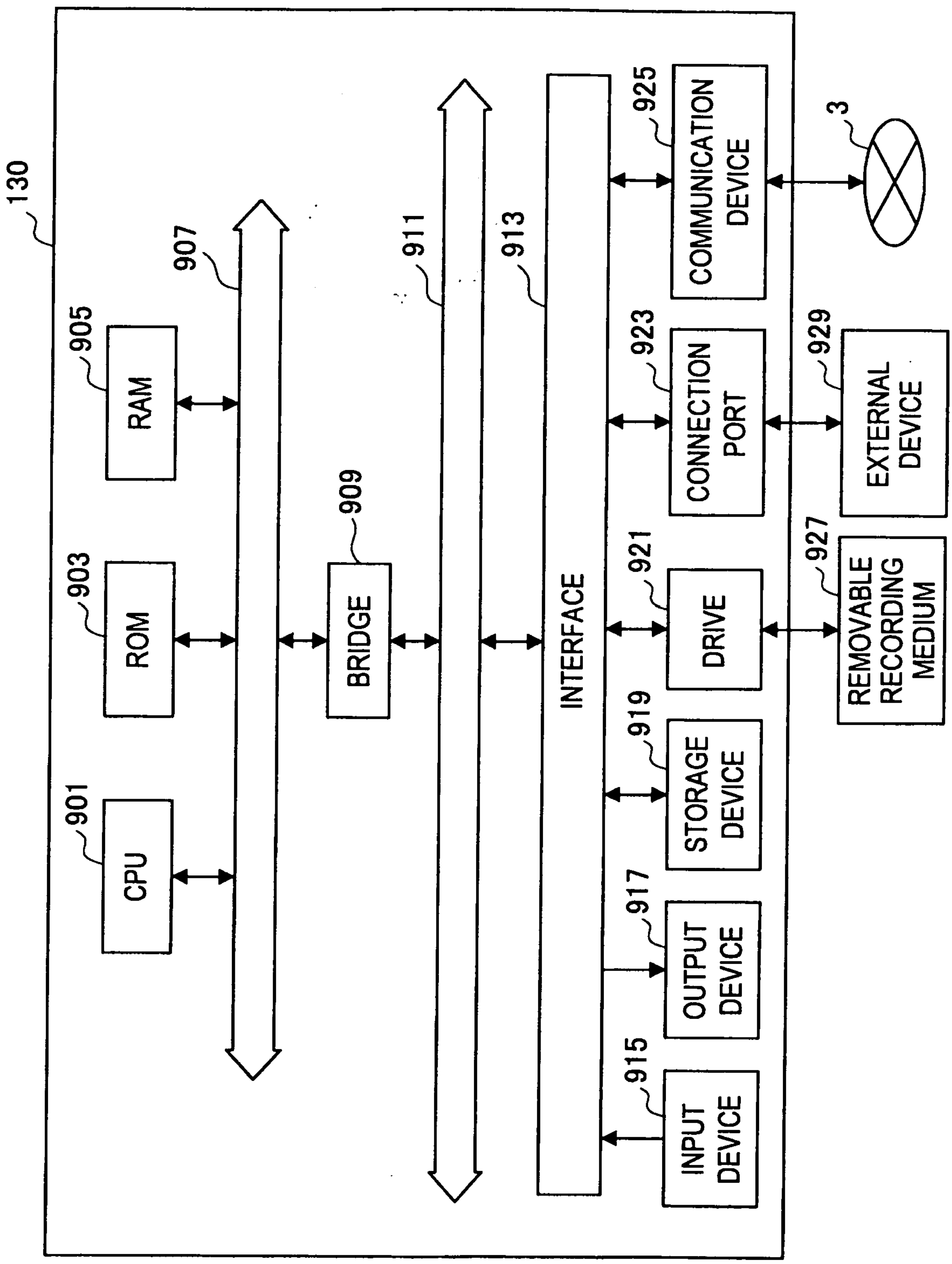
130
901
CPU
903
ROM
905
RAM
907
909
BRIDGE
911
913
INTERFACE
915
INPUT DEVICE
917
OUTPUT DEVICE
919
STORAGE DEVICE
921
DRIVE
923
CONNECTION PORT
925
COMMUNICATION DEVICE
927
REMOVABLE RECORDING MEDIUM
929
EXTERNAL DEVICE
3

Europäisches Patentamt
European Patent Office
Office européen des brevets

# EUROPEAN SEARCH REPORT

Application Number
EP 10 25 0196

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>Y<br>X,P<br><br>Y,P | WO 2008/047786 A1 (SHARP KK [JP]; OKADA YOSHIHIRO; YOSHIDA MASAHIRO; IRIBOSHI ATSUSHI; KI) 24 April 2008 (2008-04-24)<br>* abstract *<br>& EP 2 085 970 A1 (SHARP KK [JP]) 5 August 2009 (2009-08-05)<br>* paragraphs [0019], [0022], [0023], [0025], [0041], [0042], [0047], [0048], [0073], [0074], [0081]; figures 3,4 *<br>----- | 1-7,<br>10-15<br><br>8,9<br>1-7,<br>10-15<br>8,9 | INV.<br>G06F21/00<br>H04N7/24 |
| X<br><br>A | US 2008/270311 A1 (PETERKA PETR [US] ET AL) 30 October 2008 (2008-10-30)<br>* paragraphs [0007], [0020], [0023] *<br>----- | 1,3<br><br>2,4-15 | |
| Y<br><br>A | US 2006/277151 A1 (SANKARAN AYYAPPAN [US] ET AL) 7 December 2006 (2006-12-07)<br>* paragraphs [0007], [0018], [0019], [0020], [0023], [0024], [0028] *<br>----- | 8,9<br><br>1-7,<br>10-15 | |
| A | US 2007/192592 A1 (GOETTFERT RAINER [DE] ET AL) 16 August 2007 (2007-08-16)<br>* paragraphs [0008], [0018], [0019], [0025], [0035], [0036], [0038], [0040] *<br>----- | 1-15 | TECHNICAL FIELDS SEARCHED (IPC)<br>G06F<br>H04N<br>H04L<br>G11B |

The present search report has been drawn up for all claims

2

| Place of search | Date of completion of the search | Examiner |
|---|---|---|
| The Hague | 25 June 2010 | Volpato, Gian Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 10 25 0196

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2010

| Patent document cited in search report | Publication date | Patent family member(s) | Publication date |
|---|---|---|---|
| WO 2008047786 A1 | 24-04-2008 | EP 2085970 A1 | 05-08-2009 |
| | | JP 4154444 B2 | 24-09-2008 |
| | | JP 2008123658 A | 29-05-2008 |
| US 2008270311 A1 | 30-10-2008 | CA 2684376 A1 | 15-01-2009 |
| | | CN 101669126 A | 10-03-2010 |
| | | EP 2150914 A2 | 10-02-2010 |
| | | WO 2009009191 A2 | 15-01-2009 |
| US 2006277151 A1 | 07-12-2006 | NONE | |
| US 2007192592 A1 | 16-08-2007 | DE 10345385 A1 | 02-06-2005 |
| | | EP 1668516 A1 | 14-06-2006 |
| | | WO 2005036406 A1 | 21-04-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009032026 A